(19) Europäisches Patentamt / European Patent Office / Office européen des brevets

(11) **EP 3 824 574 B1**

(12) **EUROPEAN PATENT SPECIFICATION**

(45) Date of publication and mention
of the grant of the patent:
**24.07.2024 Bulletin 2024/30**

(21) Application number: **18743746.2**

(22) Date of filing: **16.07.2018**

(51) International Patent Classification (IPC):
**H04J 3/06** (2006.01)

(52) Cooperative Patent Classification (CPC):
**H04J 3/0673; H04J 3/0667**

(86) International application number:
**PCT/EP2018/069299**

(87) International publication number:
**WO 2020/015814 (23.01.2020 Gazette 2020/04)**

(54) **END-TO-END TRANSPARENT CLOCKS AND METHODS OF ESTIMATING SKEW IN END-TO-END TRANSPARENT CLOCKS**

TRANSPARENTE END-TO-END-TAKTE UND VERFAHREN ZUR SCHÄTZUNG DES VERSATZES IN TRANSPARENTEN END-TO-END-TAKTEN

HORLOGES TRANSPARENTES DE BOUT EN BOUT ET PROCÉDÉS D'ESTIMATION DE DÉCALAGE DANS DES HORLOGES TRANSPARENTES DE BOUT EN BOUT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.05.2021 Bulletin 2021/21**

(73) Proprietors:
- **Khalifa University of Science and Technology**
  **Abu Dhabi (AE)**
- **British Telecommunications Public Limited Company**
  **London, Greater London EC1A 7AJ (GB)**
- **Emirates Telecommunications Corporation**
  **Abu-Dhabi (AE)**

(72) Inventor: **AWEYA, James**
**Abu Dhabi (AE)**

(74) Representative: **J A Kemp LLP**
**80 Turnmill Street**
**London EC1M 5QU (GB)**

(56) References cited:
**WO-A1-2016/092243**

- **ZONGPENG DU ET AL: "An Enhanced End-to-End Transparent Clock Mechanism with a Fixed Delay Ratio", IEEE COMMUNICATIONS LETTERS, IEEE SERVICE CENTER, PISCATAWAY, NJ, US, vol. 15, no. 8, 1 August 2011 (2011-08-01), pages 872 - 874, XP011380842, ISSN: 1089-7798, DOI: 10.1109/LCOMM.2011.062911.110918**
- **ROSSELOT ET AL: "IEEE 1588 Boundary Clock and Transparent Clock Implementation Using the DP83640", NATIONAL SEMICONDUCTOR APPLICATION NOTE,, 28 April 2008 (2008-04-28), pages 1 - 6, XP008143402**

**Description**

Field of the invention

The present invention relates to end-to-end transparent clocks and methods of estimating skew in end-to-end transparent clocks. It is particularly, but not exclusively, concerned with techniques for estimating clock skew between a free-running clock in a transparent clock and a master clock.

Background of the Invention

IEEE1588 PTP is a time and frequency transfer protocol wherein a GrandMaster clock is synchronized to a high-quality source such as GPS and then generates packets with precise timestamps that are sent downstream to slave devices. A slave device uses these timestamps (which can be obtained through various PTP message exchange mechanisms) to derive, locally, an accurate estimate of the GM clock. The recovered GM clock at the slave is in turn supplied to equipment requiring synchronization.

The devices between the GM and slave clocks may be ordinary switches and routers, or specialized equipment with on-path support, such as Transparent Clocks (TCs), that are intended to mitigate the effects of timing impairments introduced by the network between the GM and slave. TCs have been introduced in IEEE 1588 Version 2 to allow for the measurement of the actual delays experienced by PTP packets and to communicate these delay measurements to slaves. A slave can then correctly adjust its clock while compensating for the actual delay variations. This is to allow the slaves to remove the negative effects that these delay variations cause in clock synchronization. This variation in delay and any asymmetry affects the quality of synchronization of the slave device.

For most accurate residence time measurements, the PTP clocks in each TC should be syntonized with the GrandMaster. Accurate residence time measurements determine how accurate the clock synchronization at the slave would be. However, the clock skews (or frequency differences) between the clocks at the TCs on the path and the GrandMaster can render the residence time measurements inaccurate. To obtain more accurate measurements at the TCs, the clock skews have to be accurately estimated and removed from (or compensated for) in the measurements.

One way to do so is to physically tune the TC clocks to be syntonized to the GrandMaster clock. The accurately syntonized TC clocks can then be used for residence time measurements. Alternatively, syntonization may be handled on the TC processor (in software) without physically adjusting the rate of the TC clocks, that is, the TCs use free-running clocks. The computed clock skew (between the free-running TC clock and GrandMaster) may be used by the TC to modify the measured residence times inserted into Sync/Follow_Up and Delay_Resp messages.

There are currently two main methods used to syntonize the TC clocks. One is using Synchronous Ethernet (SyncE) (defined in ITU-T Recommendations G.8261, G.8262, and G.8264) which is a timing transfer method that passes timing over the Physical Layer of Ethernet using SONET/SDH-like timing techniques. The main limitation of this method is that it cannot be applied over networks (even Ethernet) which have already been deployed without such timing transfer capabilities. An implementation will require an all SyncE network on the path linking the GrandMaster and the TC. In such an implementation, the timing signal carried by SyncE is used to frequency lock the TC oscillator to the GrandMaster The other method is generating syntonization signals from timestamps captured from Sync messages (only) sent from the GrandMaster to the slave device. The syntonization signal can be used to physically tune the TC oscillator or modify the measured residence times. The example methods described in the IEEE 1588 Version 2 Standard for generating the syntonization signals are very simplistic (using Sync messages only and simple linear estimation techniques) such that they do not provide accurate syntonization.

**Overview of IEEE 1588v2 PTP**

The GrandMaster (GM) is the root timing reference in a domain and transmits synchronization information to the clocks residing in its domain. In IEEE 1588v2 PTP messages are categorized into event and general messages. All IEEE 1588 PTP messages have a common header. Event messages are timed messages in that an accurate timestamp is generated at both transmission and receipt of each message. Event messages have to be accurately timestamped since the accuracy in transmission and receipt timestamps directly affects clock distribution accuracy.

A timestamp event is generated at the time of transmission and reception of any event message. General messages are not required to be timestamped. The set of event messages consists of Sync, Delay_Req, Pdelay_Req, and Pdelay_Resp. The set of general messages consists of Announce, Follow_Up, Delay_Resp, Pdelay_Resp_Follow_Up, Management, and Signaling.

IEEE 1588 PTP allows for two different types of timestamping methods, either one-step or two-step. One-step clocks update time information within event messages (Sync and Delay-Req) on-the-fly, while two-step clocks convey the precise timestamps of packets in general messages (Follow_Up and Delay-Resp).

The Sync, Delay_Req, Follow_Up, and Delay_Resp messages are used to generate and communicate the timing information needed to synchronize ordinary and boundary clocks (see description below) using the delay request-response mechanism. A Sync message is transmitted by a GM to its slaves and either contains the exact time of its transmission or is followed by a Follow_Up message containing this time. In a two-step ordinary or boundary clock, the Follow_Up message communicates the value of the departure timestamp for a particular Sync message. A Delay_Req message is a request for the receiving node to return the time at which the Delay_Req message was received, using a Delay_Resp message.

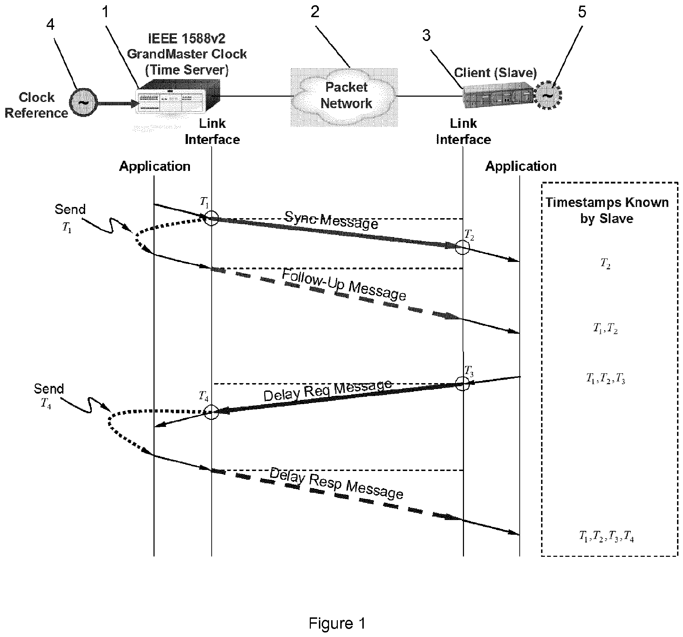

The basic pattern of synchronization message exchanges for the one-step and two-step clocks are illustrated in Figure 1. The message exchange pattern for the two-step clock can be explained as follows. The GM 1 sends a Sync message to the slave 3 over a packet network 2 and notes the time $T_1$ at which it was sent according to the GM clock 4. The slave 3 receives the Sync message and notes the time of reception $T_2$ according to the slave clock 5. The GM 1 conveys to the slave the timestamp $T_1$ by one of two ways: 1) Embedding the timestamp $T_1$ in the Sync message (one-step clock). This requires some sort of hardware processing (i.e., hardware timestamping) for highest accuracy and precision. 2) Embedding the timestamp $T_1$ in a Follow_Up message (two-step clock). Next, the slave 3 sends a Delay_Req message to the GM 1 and notes the time $T_3$ at which it was sent according to the slave clock 5. The GM 1 receives the Delay_Req message and notes the time of reception $T_4$ according to the GM clock 4. The GM 1 conveys to the slave the timestamp $T_4$ by embedding it in a Delay_Resp message.

At the end of this PTP messages exchange, the slave 3 possesses all four timestamps $\{T_1, T_2, T_3, T_4\}$. These timestamps may be used to compute the offset of the slave clock 5 with respect to the GM clock 4 and the mean propagation time of messages between the two clocks. The computation of offset and propagation time often assumes that the GM-to-slave and slave-to-GM propagation times are equal - i.e. a symmetrical communication path.

**Transparent Clocks**

A TC acts invisibly to the GM and slave from a synchronization perspective by providing a timestamp correction term to PTP event messages traversing the TC. There are two forms of transparent clocks. The end-to-end (E2E) TC provides a correction that reflects the residence time (or dwell-time) of the packet within the equipment itself. A peer-to-peer (P2P) TC includes in the correction its own internal delay as well as an estimate of the link delay between itself and its upstream device.

TCs are PTP devices that operate as normal switches, but they update the correction field (*correctionField*) of the PTP packets with a value equal to their residence time, that is, the time the packet was delayed in the switch (E2E TCs), or the residence time plus the peer link delay (P2P TCs). The purpose of the TC function providing on-path support is to remove the effect of PDV by informing downstream devices of precisely what these delays were on a packet-by-packet basis.

*End-to-End (E2E) Transparent Clock*

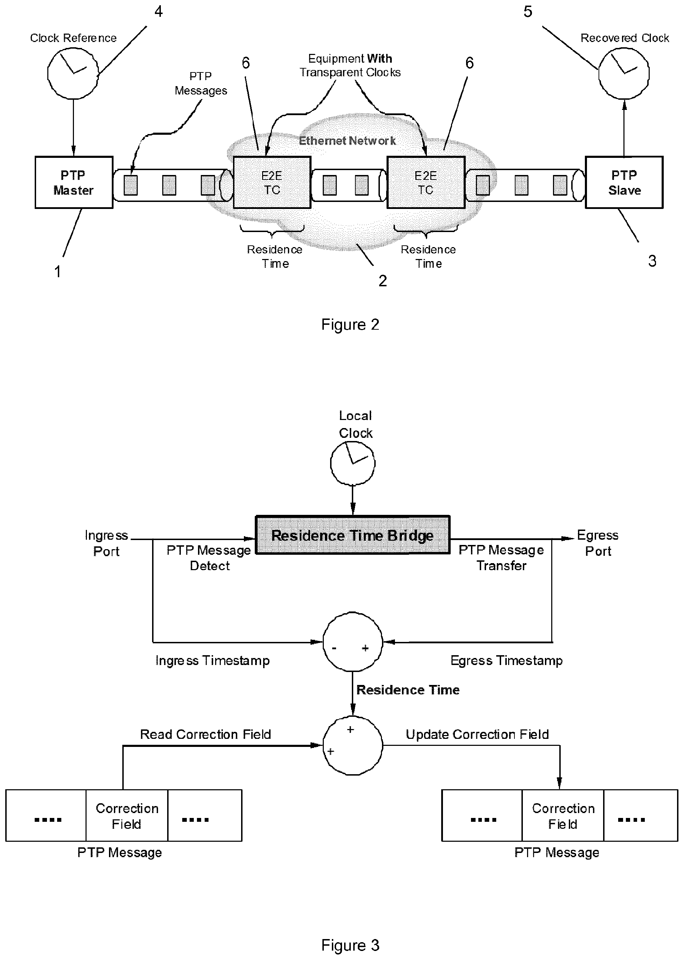

An E2E Transparent Clock is a multi-port device that is not a master or slave clock but a bridge between the two. This clock measures the message transit time (also known as resident time) in the device for (PTP event) Sync and Delay_Req messages. The use of E2E TCs 6 is shown schematically in Figure 2. This measured transit time is added to the correction field in the corresponding messages:

- The measured transit time of a Sync message is added to the correction field of the corresponding Sync or the Follow_Up message. In the one-step mode the residence time is added to the correction field of the Sync message; in the two-step mode the residence time is added to the correction field of the Follow_Up message.

- The measured transit time of a Delay_Req message is added to the correction field of the corresponding Delay_Resp message.

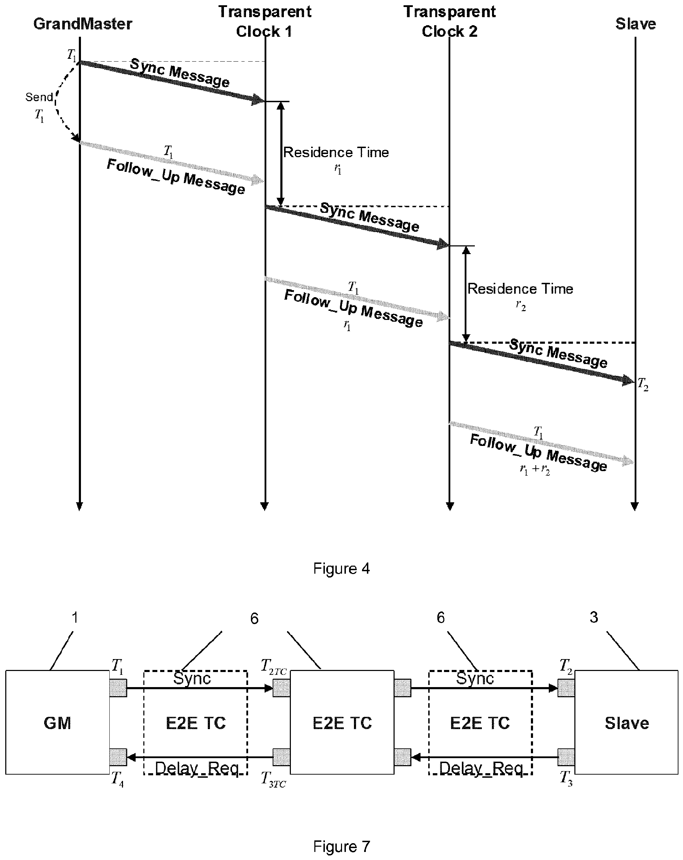

E2E TC devices 6 measure the delay caused by the PTP packet residing in the TC device and increment the correction field in the PTP header as shown in Figure 3. Figure 4 shows the flow of PTP messages through an example network of E2E TC devices. The correction field ends up containing the sum of all the residence times that a Sync or Delay_Req message has encountered on its way through all E2E-TC network elements on the path.

By doing so, the slave clock or boundary clock further down the line can determine how long the PTP packet resided in the TC devices before it. The slave clock can then use the residence times accumulated in the correction field to mitigate the effects of PDV. This information is used by the slave when determining the clock offset and skew between the slave's and the master's time. E2E transparent clocks do not provide correction for the propagation delay of the link itself between devices; only P2P TCs support this.

A one-step E2E TC updates for switch delay in Sync and Delay-Req messages as they pass through the switch while a two-step TC updates a field in the non time-critical general message (Follow_Up and Delay_Resp).

The process in Figure 4 continues hop by hop (where N is the number of hops or links), and the Follow-Up (two-step mode), Sync (one-step mode) or Delay_Req (delay request-response mechanism) messages maintain a running total of the residence times; resulting in a grand total delay value from GM to slave. Upon receipt of the final message, the slave device calculates its offset using the total residence time which is accumulated in the correction field as follows:

$$total\_residence\_time = \sum_{i=1}^{N-1} r_i$$

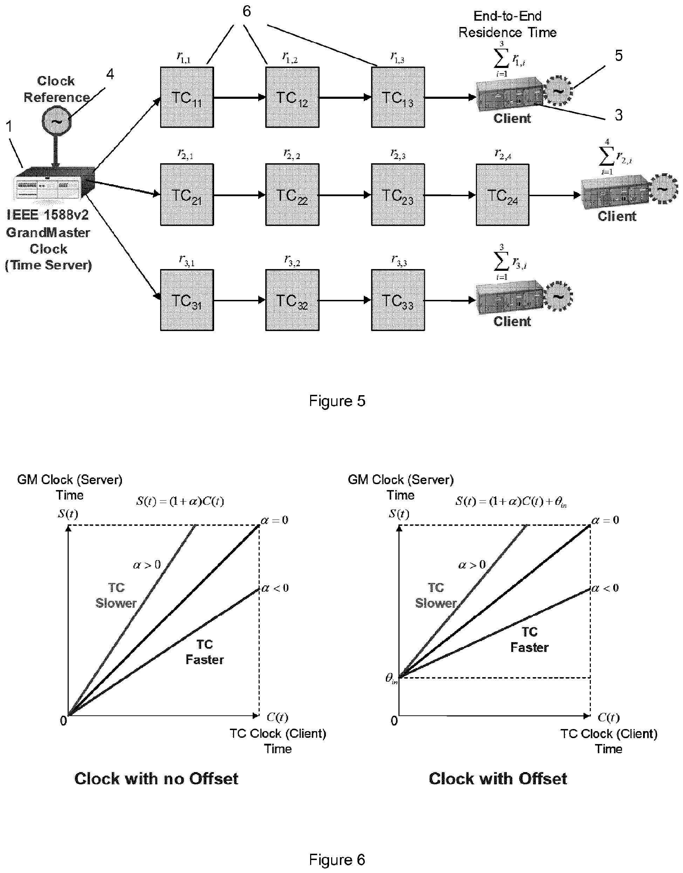

As shown in Figure 5, the transparent clock devices 6 on the communication path to each slave 3 measure the delay caused by the PTP packet residing in the TC device and increments the correction field in the PTP header. By doing so, the slave clock 5 or boundary clock further down the line can determine how long the PTP packet resided in the TC devices before it. The slave 3 can then use the values in the correction field to compensate for the effects PDV on its path when synchronizing it clock to the GM clock 4.

**Merits of using Syntonized or Skew Compensated Transparent Clocks**

Syntonizing or compensating for the skew can help in improving residence time measurement accuracy. As explained above, accurate residence time measurements enable accurate synchronization at the slave. Consider the case where a TC clock is not syntonized or contains a free-running oscillator with frequency accuracy (or skew) $\alpha_{free}$ no worse than $\pm100$ ppm. If residence time is measured using this oscillator, there will be an error on the order of the residence time multiplied by the actual frequency offset $\alpha_{free}$.

Let $r_{ideal}$ be the ideal residence time (when the TC is accurately syntonized to the GM) and $r_{act}$ be the actual measured residence time when the TC is not accurately syntonized or the TC is using a free-running oscillator and has skew of $\alpha_{free}$. This gives:

$$r_{act} = (1 + \alpha_{free})r_{ideal} = r_{ideal} + \alpha_{free}r_{ideal} = r_{ideal} + r_{error}, (1)$$

In the above equation, $r_{error}$ is the (positive or negative) error in the residence time measurement when the skew is non-zero and is $\alpha_{free}$.

Optimum synchronization performance is obtained when all TCs on a synchronization path are frequency locked (syntonized) to the GM clock. If a TC is not frequency synchronized to the GM, a TC with a $\pm100$ ppm accuracy will contribute a measurement error of $\pm(0.0001 \times 10\,ms) = \pm1\,\mu s$ (or $\pm1000$ ns) to the residence time if the ideal residence time is 10 ms. However, a positive effect is that oscillators do not typically operate at the extreme ends of their accuracy limits.

To reduce this error, IEEE 1588 Version 2 allows the TC to be syntonized, i.e., synchronized in frequency, to the GM. Each TC will use its own internal mechanisms to measure frequency offset relative to the GM and to synthesize a frequency signal that is syntonized with the GM. This synthesis may be done via hardware, firmware, or software.

Assume a network with nodes having standard Ethernet oscillators, with nominal frequencies of 25 MHz for 100 Mbit/s Ethernet and 125 MHz for 1 Gbit/s Ethernet. This means that the phase measurement granularity in the TC and ordinary clock can be as much as 40 ns for 100 Mbits/s Ethernet. Additional phase error will result from the variable component of latency in the Ethernet physical layer (PHY) (the fixed component can be specified by the manufacturer in the design).

Considering the case of a syntonized TC local oscillator, if the frequency offset between the GM and TC oscillator is measured and a syntonized frequency is created, the use of this frequency for the TC delay computation will greatly reduce the magnitude of the TC measurement errors. The phase step magnitude will now be on the order of the syntonized frequency measurement accuracy multiplied by the synch interval.

For example, if the phase measurement granularity is 40 ns (assuming a 25 MHz oscillator for 100 Mbit/s Ethernet) and the TC oscillator frequency offset is measured/syntonized over 100 ms (to be at this phase granularity or, in other words, frequency), then the measured frequency offset or skew is $40 \times 10^{-9}s/0.1\,s = 400 \times 10^{-9} = 0.4$ ppm (parts-per-million). The TC measurement error or offset now is $(400 \times 10^{-9})(0.01\,s) = 4$ ns, i.e., the TC measurement error is reduced from the 1000 ns computed when an unsyntonized clock or free-running local oscillator is used for the measurement by a factor of 250.

In practice, the reduction will not be this large because other effects are present, e.g., oscillator phase noise and drifts due to temperature effects, phase measurement error due to the variable portion of the PHY latency, and frequency measurement granularity.

For most accurate residence time measurements, the clocks in each TC should be syntonized with the GM. Syntonization only requires correction to the TC oscillator frequency. The TC host processor can use the ingress timestamps from Sync messages to determine a frequency (rate) correction required for the TC clock. Alternatively, syntonization may be handled on the TC host processor without adjusting the frequency of the TC clocks. The frequency correction may be used to modify the computed residence times inserted into Follow_Up and Delay_Resp messages.

WO 2016/092243A discloses methods and devices for time transfer having particular application in the alignment of slave clocks to a master clock and dealing with packet delay variations. In embodiments the slave clock uses the residence times measured by end-to-end transparent clocks to compensate for clock synchronization errors that arise due to variability in message transfer delays. Embodiments provide a simple linear approximation technique and a Kalman filter-based technique for estimating offset and skew of the slave clock.

Z. Du et al. in "An Enhanced End-to-End Transparent Clock Mechanism with a Fixed Delay Ratio", IEEE Communications Letters, vol. 15, no. 8, pages 872-874 discloses an enhanced end-to-end transparent clock mechanism with a fixed delay ratio to solve the rate mismatch problem. The proposed mechanism, which is not compatible with current IEEE 1588 systems, needs two rounds of message exchange, and the massages in the second round are delayed for a specified time related to the fixed delay ratio. Simulations demonstrate that the proposed mechanism can recover precise time to fulfill the critical synchronization requirement of telecommunications networks.

Rosselot et al. in "IEEE 1588 Boundary Clock and Transparent Clock Implementation Using the DP83640", National Semiconductor Application Note, 28 April 2008, pages 1-6 discloses a "DP83640" which aims to provide a highly accurate solution while reducing the amount of additional circuitry required to implement the clock and timestamp features of an IEEE 1588 capable boundary clock or transparent clock device. Since timestamping is done internal to the physical layer device (PHY), the timestamps are equally deterministic in all modes of operation, providing for the highest accuracy solution.

An object of the present invention is to provide techniques that allow an E2E TC with free-running local clock to use timing message timestamps intercepted by the TC for accurate clock skew estimation.

A further object of the present invention is to improve the accuracy of the residence times computed by an E2E TC.

## Summary of the Invention

At their broadest, aspects of the present invention provide for methods and systems for estimating the skew of a local clock in an end-to-end transparent clock device using information from timing messages passing between a master and slave device through that transparent clock device.

A first aspect of the present invention provides a method of estimating the skew of a local clock according to claim 1.

In this way the skew of the local clock can be accurately estimated using the existing pattern of timing messages exchanged between the master and slave devices and without the need for physical synchronization or use of separate timing messages.

Further, by taking account of the message flows in both the forward (master to slave) and reverse (slave to master) direction, a more accurate estimation of the skew of the local clock may be obtained.

Preferably the timing messages are messages under the IEEE 1588 PTP.

Preferably the method further includes the step of syntonizing the local clock to the master clock. By syntonizing (synchronizing the frequency) the local clock to the master clock, the timing information provided by the transparent clock can be made more accurate, but without the need for physical syntonization. The syntonization can be achieved by post-processing the output of a free-running local clock.

Preferably the method further includes the step of computing modified residence times in the transparent clock device using the estimated skew of the local clock. By computing more accurate residence times in the transparent clock device, the accuracy of the synchronization of a clock in the slave device to the master clock can be improved as more accurate information regarding the delays in the network between the master and the salve device can be provided. Ideally, all transparent clocks between the master and the slave would compute modified residence times in this manner, but improvements will result even if only one of the transparent clocks operates in this manner.

Preferably the step of computing modified residence times uses a filtered value of the skew, for example using an exponentially weighted moving average filter.

In certain embodiments the master device and transparent clock device are capable of hardware timestamping arriving and outgoing timing messages, and the step of extracting the residence time includes: extracting the residence time recorded in the timing messages sent from the master device to the slave device on arrival in the transparent clock device; and extracting the residence time recorded in the timing messages sent from the slave device to the master device on departure from the transparent clock device and the total residence time recorded between the slave device and the master device.

In such "one-step clock" arrangements, the residence time in transparent clocks between the master device and the transparent clock device itself in the forward direction between the master and the slave can be determined from the residence time recorded in a timing message when it arrives at the transparent clock. The residence time in the same transparent clocks in the reverse direction (slave to master) is the difference between the residence time for all transparent clocks between the slave and the message leaving the transparent clock device itself and the total residence time for the entire journey from slave to master.

In certain embodiments the master device and transparent clock device are not capable of hardware timestamping the arriving and outgoing timing messages, the method further including the steps of: for each first timing message (e.g. an IEEE 1588 PTP "Sync" message) sent from the master device to the slave device, sending a first further timing message (e.g. an IEEE 1588 PTP "Follow_Up" message) from the master device to the slave device which contains the time of sending of the respective first timing message by the master device, and to which is cumulatively added, by each transparent clock that the further timing message passes through, a first residence time being the time taken for the respective first timing message to pass through each said transparent clock device; and for each second timing message sent from the slave device to the master device (e.g. an IEEE 1588 PTP "Delay_Req" message), sending a second further timing message (e.g. an IEEE 1588 PTP "Delay_Resp" message) from the master device to the slave device which contains the time of receipt of the respective second timing message by the master device, and to which is cumulatively added, by each transparent clock that the second further timing message passes through, a second residence time being the time taken for the respective second timing message to pass through each said transparent clock device, and wherein the step of extracting the residence time includes: extracting the first residence time recorded in one of said first further timing messages; and extracting the second residence time recorded in one of said second further timing messages on receipt of the second further timing message at the transparent clock device.

In such "two-step clock" arrangements, the residence time in transparent clocks between the master device and the transparent clock device itself in the forward direction between the master and the slave can be determined from the residence time recorded in the first further timing message (e,g. "Follow_Up" message) when it arrives at the transparent clock. The residence time in the same transparent clocks in the reverse direction (slave to master) is recorded by the transparent clocks as the message (e.g. "Delay_Req" message) passes through those transparent clocks, but is added to the second further timing message (e.g. "Delay_Resp" message) when it is returned to the slave.

In certain embodiments, the step of estimating the skew of the local clock is a linear approximation. For example the step of estimating may include: calculating a component $\alpha_1$ of the skew in the forward direction from master device to slave device as:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wherein $T_{1,n}$ is the departure time of the nth timing message sent from the master device to the slave device, $T_{2TC,n}$ is the arrival time of the nth timing message sent from the master device to the slave device at the transparent clock device and $r_{ftotal,n}$ is the cumulative residence time of the nth timing message sent from the master device to the slave device in other transparent clock devices whilst travelling between the master device and the transparent clock device, calculating a component $\alpha_2$ of the skew in the reverse direction from slave device to master device as:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wherein $T_{4,n}$ is the arrival time of the nth timing message sent from the slave device to the master device, $T_{3TC,n}$ is the departure time of the nth timing message sent from the slave device to the master device from the transparent clock device and $r_{rtotal,n}$ is the cumulative residence time of the nth timing message sent from the slave device to the master device in other transparent clock devices whilst travelling between the transparent clock device and the master device, and estimating the skew as the average of $\alpha_1$ and $\alpha_2$.

In certain embodiments the step of estimating the skew of the local clock includes operating a Kalman filter. For example a Kalman filter may be operated using the measurement equation

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

wherein $\theta_n$ and $\alpha_n$ are the total offset and skew during the nth exchange of timing messages, $T_{1,n}$ is the departure time of the nth timing message sent from the master device to the slave device, $T_{2TC,n}$ is the arrival time of the nth timing message sent from the master device to the slave device at the transparent clock device $T_{4,n}$ is the arrival time of the nth timing message sent from the slave device to the master device, $T_{3TC,n}$ is the departure time of the nth timing message sent from the slave device to the master device from the transparent clock device, $r_{ftotal,n}$ is the cumulative residence time of the nth timing message sent from the master device to the slave device in other transparent clock devices whilst travelling between the master device and the transparent clock device, $r_{rtotal,n}$ is the cumulative residence time of the nth timing message sent from the slave device to the master device in other transparent clock devices whilst travelling between the transparent clock device and the master device, $d_f$ and $d_r$ are the fixed delays in the directions from master device to slave device and slave device to master devices respectively, $y_n = (T_{1,n} - T_{2TC,n}) + (T_{4,n} - T_{3TC,n})$ + ($d_f$ - $d_r$) + ($r_{ftotal,n}$ - $r_{rtotal,n}$) is a scalar, n is a nonnegative time index, $D_n$ = [2 0] is a 1×2 matrix, $X_n^T = \begin{bmatrix} \theta_n & \alpha_n \end{bmatrix}$ is a vector, and $v_n$ = ($\gamma_n$ - $\varepsilon_n$) is the measurement noise,

and using the state equation:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

where $w_n^T = \begin{bmatrix} w_{\theta,n} & w_{\alpha,n} \end{bmatrix}$ is a process noise vector.

Embodiments using a Kalman filter such as that above can also estimate the offset of the local clock compared to the master clock.

The method of the present aspect may include any combination of some, all or none of the above described preferred and optional features.

The method of the above aspect is preferably implemented by a transparent clock device according to the second aspect of this invention, or a networked time system according to the third aspect of this invention, as described below, but need not be.

Further aspects of the present invention include computer programs for running on computer systems which carry out the method of the above aspect, including some, all or none of the preferred and optional features of that aspect.

A second aspect of the present invention provides an end-to-end transparent clock device according to claim 8.

In this way the skew of the local clock can be accurately estimated using the existing pattern of timing messages exchanged between the master and slave devices and without the need for physical synchronization or use of separate timing messages.

Further, by taking account of the message flows in both the forward (master to slave) and reverse (slave to master) direction, a more accurate estimation of the skew of the local clock may be obtained.

Preferably the timing messages are messages under the IEEE 1588 PTP.

Preferably the processor is further arranged to syntonize the local clock to the master clock. By syntonizing (synchronizing the frequency) the local clock to the master clock, the timing information provided by the transparent clock can be made more accurate, but without the need for physical syntonization. The syntonization can be achieved by post-processing the output of a free-running local clock.

Preferably the processor is further arranged to compute modified residence times in the transparent clock device using the estimated skew of the local clock. By computing more accurate residence times in the transparent clock device, the accuracy of the synchronization of a clock in the slave device to the master clock can be improved as more accurate information regarding the delays in the network between the master and the salve device can be provided. Ideally, all transparent clocks between the master and the slave would compute modified residence times in this manner, but improvements will result even if only one of the transparent clocks operates in this manner.

Preferably the step of computing modified residence times uses a filtered value of the skew, for example using an exponentially weighted moving average filter.

In certain embodiments the transparent clock device is capable of hardware timestamping arriving and outgoing timing messages, and the processor is arranged to extract the residence time by: extracting the residence time recorded in the timing messages sent from the master device to the slave device on arrival in the transparent clock device; and extracting the residence time recorded in the timing messages sent from the slave device to the master device on departure from the transparent clock device and the total residence time recorded between the slave device and the master device.

In such "one-step clock" arrangements, the residence time in transparent clocks between the master device and the transparent clock device itself in the forward direction between the master and the slave can be determined from the residence time recorded in a timing message when it arrives at the transparent clock. The residence time in the same transparent clocks in the reverse direction (slave to master) is the difference between the residence time for all transparent clocks between the slave and the message leaving the transparent clock device itself and the total residence time for the entire journey from slave to master.

In certain embodiments the transparent clock device is not capable of hardware timestamping the arriving and outgoing timing messages, wherein: for each first timing message (e.g. an IEEE 1588 PTP "Sync" message) sent from the master device to the slave device, sending a first further timing message (e.g. an IEEE 1588 PTP "Follow_Up" message) from the master device to the slave device which contains the time of sending of the respective first timing message by the master device, and to which is cumulatively added, by each transparent clock that the further timing message passes through, a first residence time being the time taken for the respective first timing message to pass through each said transparent clock device; and for each second timing message (e.g. an IEEE 1588 PTP "Delay_Req" message) sent from the slave device to the master device, sending a second further timing message (e.g. an IEEE 1588 PTP "Delay_Resp" message) from the master device to the slave device which contains the time of receipt of the respective second timing message by the master device, and to which is cumulatively added, by each transparent clock that the second further timing message passes through, a second residence time being the time taken for the respective second timing message to pass through each said transparent clock device, and wherein the processor is arranged to extract the residence time by: extracting the first residence time recorded in one of said first further timing messages; and extracting the second residence time recorded in one of said second further timing messages on receipt of the second further timing message at the transparent clock device.

In such "two-step clock" arrangements, the residence time in transparent clocks between the master device and the transparent clock device itself in the forward direction between the master and the slave can be determined from the residence time recorded in the first further timing message (e,g. "Follow_Up" message) when it arrives at the transparent clock. The residence time in the same transparent clocks in the reverse direction (slave to master) is recorded by the transparent clocks as the message (e.g. "Delay_Req" message) passes through those transparent clocks, but is added to the second further timing message (e.g. "Delay_Resp" message) when it is returned to the slave.

In certain embodiments the processor is arranged to estimate the skew of the local clock using a linear approximation. For example the estimation may be done by: calculating a component $\alpha_1$ of the skew in the forward direction from master device to slave device as:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wherein $T_{1,n}$ is the departure time of the nth timing message sent from the master device to the slave device, $T_{2TC,n}$ is the arrival time of the nth timing message sent from the master device to the slave device at the transparent clock device and $r_{ftotal,n}$ is the cumulative residence time of the nth timing message sent from the master device to the slave device in other transparent clock devices whilst travelling between the master device and the transparent clock device, calculating a component $\alpha_2$ of the skew in the reverse direction from slave device to master device as:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wherein $T_{4,n}$ is the arrival time of the nth timing message sent from the slave device to the master device, $T_{3TC,n}$ is the departure time of the nth timing message sent from the slave device to the master device from the transparent clock device and $r_{rtotal,n}$ is the cumulative residence time of the nth timing message sent from the slave device to the master device in other transparent clock devices whilst travelling between the transparent clock device and the master device, and estimating the skew as the average of $\alpha_1$ and $\alpha_2$.

In certain embodiments the processor is arranged to estimate the skew of the local clock by operating a Kalman filter. For example a Kalman filter may be operated using the measurement equation

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

wherein $\theta_n$ and $\alpha_n$ are the total offset and skew during the nth exchange of timing messages, $T_{1,n}$ is the departure time of the nth timing message sent from the master device to the slave device, $T_{2TC,n}$ is the arrival time of the nth timing message sent from the master device to the slave device at the transparent clock device $T_{4,n}$ is the arrival time of the nth timing message sent from the slave device to the master device, $T_{3TC,n}$ is the departure time of the nth timing message sent from the slave device to the master device from the transparent clock device, $r_{ftotal,n}$ is the cumulative residence time of the nth timing message sent from the master device to the slave device in other transparent clock devices whilst travelling between the master device and the transparent clock device, $r_{rtotal,n}$ is the cumulative residence time of the nth timing message sent from the slave device to the master device in other transparent clock devices whilst travelling between the transparent clock device and the master device, $d_f$ and $d_r$ are the fixed delays in the directions from master device to slave device and slave device to master devices respectively, $y_n = (T_{1,n} - T_{2TC,n}) + (T_{4,n} - T_{3TC,n})$

+ $(d_f - d_r)$ + $(r_{ftotal,n} - r_{rtotal,n})$ is a scalar, n is a nonnegative time index, $D_n$ = [2 0] is a 1×2 matrix, $X_n^T = [\theta_n \quad \alpha_n]$ is a vector, and $v_n = (\gamma_n - \varepsilon_n)$ is the measurement noise,
and using the state equation:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

where $w_n^T = [w_{\theta,n} \quad w_{\alpha,n}]$ is a process noise vector.

Embodiments using a Kalman filter such as that above can also estimate the offset of the local clock compared to the master clock.

The device of the present aspect may include any combination of some, all or none of the above described preferred and optional features.

A third aspect of the present invention provides a networked time system according to claim 15.

In this way the skew of the local clock can be accurately estimated using the existing pattern of timing messages exchanged between the master and slave devices and without the need for physical synchronization or use of separate timing messages.

Further, by taking account of the message flows in both the forward (master to slave) and reverse (slave to master) direction, a more accurate estimation of the skew of the local clock may be obtained.

Preferably the timing messages are messages under the IEEE 1588 PTP.

Preferably the processor is further arranged to syntonize the local clock to the master clock. By syntonizing (synchronizing the frequency) the local clock to the master clock, the timing information provided by the transparent clock can be made more accurate, but without the need for physical syntonization. The syntonization can be achieved by post-processing the output of a free-running local clock.

Preferably the processor is further arranged to compute modified residence times in the transparent clock device using the estimated skew of the local clock. By computing more accurate residence times in the transparent clock device, the accuracy of the synchronization of a clock in the slave device to the master clock can be improved as more accurate information regarding the delays in the network between the master and the salve device can be provided. Ideally, all transparent clocks between the master and the slave would compute modified residence times in this manner, but improvements will result even if only one of the transparent clocks operates in this manner.

Preferably the step of computing modified residence times uses a filtered value of the skew, for example using an exponentially weighted moving average filter.

In certain embodiments the master device and transparent clock device are capable of hardware timestamping arriving and outgoing timing messages, the processor is arranged to extract the residence time by: extracting the residence time recorded in the timing messages sent from the master device to the slave device on arrival in the transparent clock device; and extracting the residence time recorded in the timing messages sent from the slave device to the master device on departure from the transparent clock device and the total residence time recorded between the slave device and the master device.

In such "one-step clock" arrangements, the residence time in transparent clocks between the master device and the transparent clock device itself in the forward direction between the master and the slave can be determined from the residence time recorded in a timing message when it arrives at the transparent clock. The residence time in the same transparent clocks in the reverse direction (slave to master) is the difference between the residence time for all transparent clocks between the slave and the message leaving the transparent clock device itself and the total residence time for the entire journey from slave to master.

In certain embodiments the master device and transparent clock device are not capable of hardware timestamping the arriving and outgoing timing messages, wherein the master device is further arranged to: for each first timing message (e.g. an IEEE 1588 PTP "Sync" message (e.g. an IEEE 1588 PTP "Follow_Up" message) from the master device to the slave device which contains the time of sending of the respective first timing message by the master device, and to which is cumulatively added, by each transparent clock that the further timing message passes through, a first residence time being the time taken for the respective first timing message to pass through each said transparent clock device; and for each second timing message (e.g. an IEEE 1588 PTP "Delay_Req" message) sent from the slave device to the master device, send a second further timing message (e.g. an IEEE 1588 PTP "Delay_Resp" message) from the master device to the slave device which contains the time of receipt of the respective second timing message by the master device, and to which is cumulatively added, by each transparent clock that the second further timing message passes through, a second residence time being the time taken for the respective second timing message to pass through each said transparent clock device, and wherein the processor is further arranged to: extract the first residence time recorded in one of said first further timing messages; and extract the second residence time recorded in one of said second further timing messages on receipt of the second further timing message at the transparent clock device.

in such "two-step clock" arrangements, the residence time in transparent clocks between the master device and the transparent clock device itself in the forward direction between the master and the slave can be determined from the residence time recorded in the first further timing message (e.g. "Follow_Up" message) when it arrives at the transparent clock. The residence time in the same transparent clocks in the reverse direction (slave to master) is recorded by the transparent clocks as the message (e.g. "Delay_Req" message) passes through those transparent clocks, but is added to the second further timing message (e.g. "Delay_Resp" message) when it is returned to the slave.

in certain embodiments the processor is arranged to estimate the skew of the local clock using a linear approximation. For example, the estimation may be done by: calculating a component $\alpha_1$ of the skew in the forward direction from master device to slave device as:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wherein $T_{1,n}$ is the departure time of the $n$th timing message sent from the master device to the slave device, $T_{2TC,n}$ is the arrival time of the $n$th timing message sent from the master device to the slave device at the transparent clock device and $r_{ftotal,n}$ is the cumulative residence time of the nth timing message sent from the master device to the slave device in other transparent clock devices whilst travelling between the master device and the transparent clock device, calculating a component $\alpha_2$ of the skew in the reverse direction from slave device to master device as:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wherein $T_{4,n}$ is the arrival time of the nth timing message sent from the slave device to the master device, $T_{3TC,n}$ is the departure time of the nth timing message sent from the slave device to the master device from the transparent clock device and $r_{rtotal,n}$ is the cumulative residence time of the nth timing message sent from the slave device to the master device in other transparent clock devices whilst travelling between the transparent clock device and the master device, and estimating the skew as the average of $\alpha_1$ and $\alpha_2$.

In certain embodiments the processor is further arranged to estimate the skew of the local clock by operating a Kalman filter. For example the Kalman filter may be operated using the measurement equation

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

wherein $\theta_n$ and $\alpha_n$ are the total offset and skew during the nth exchange of timing messages, $T_{1,n}$ is the departure time of the nth timing message sent from the master device to the slave device, $T_{2TC,n}$ is the arrival time of the nth timing message sent from the master device to the slave device at the transparent clock device $T_{4,n}$ is the arrival time of the nth timing message sent from the slave device to the master device, $T_{3TC,n}$ is the departure time of the nth timing message sent from the slave device to the master device from the transparent clock device, $r_{ftotal,n}$ is the cumulative residence time of the nth timing message sent from the master device to the slave device in other transparent clock devices whilst travelling between the master device and the transparent clock device, $r_{rtotal,n}$ is the cumulative residence time of the nth timing message sent from the slave device to the master device in other transparent clock devices whilst travelling between the transparent clock device and the master device, $d_f$ and $d_r$ are the fixed delays in the directions from master device to slave device and slave device to master devices respectively, $Y_n = (T_{1,n} - T_{2TC,n}) + (T_{4,n} - T_{3TC,n})$

$+ (d_f - d_r) + (r_{ftotal,n} - r_{rtotal,n})$ is a scalar, n is a nonnegative time index, $D_n = [2\ 0]$ is a $1 \times 2$ matrix, $X_n^T = \begin{bmatrix} \theta_n & \alpha_n \end{bmatrix}$ is a vector, and $v_n = (\gamma_n - \varepsilon_n)$ is the measurement noise,
and using the state equation:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

where $w_n^T = \begin{bmatrix} w_{\theta,n} & w_{\alpha,n} \end{bmatrix}$ is a process noise vector.

Embodiments using a Kalman filter such as that above can also estimate the offset of the local clock compared to the master clock.

The system of the present aspect may include any combination of some, all or none of the above described preferred and optional features.

Brief Description of the Drawings

Embodiments of the invention will now be described by way of example with reference to the accompanying drawings in which:

Figure 1 shows the message flow according to the two-step clock of IEEE 1588 PTP and has already been described;
Figure 2 shows the principles of clock transfer using end-to-end (E2E) transparent clocks and has already been described;
Figure 3 shows the application of corrections in E2E transparent clocks and has already been described;
Figure 4 shows the message flow through E2E transparent clocks and has already been described;
Figure 5 shows the principles of time distribution using transparent clocks and has already been described;
Figure 6 shows the relationship between GrandMaster and transparent clocks with offset and skew; and
Figure 7 illustrates the timestamps at the GrandMaster and at a transparent clock on the transmission path.

Detailed Description

**Clock Skew Estimation and Residence Time Measurement Correction at the End-to-End Transparent Clocks**

in the present embodiments it is assumed that a free-running local oscillator is used at a TC. The frequency of this TC local oscillator is not adjusted physically, but it is allowed to free-run. This free-running oscillator drives a counter which is in turn used for timestamping at the TC and for the uncorrected measurement of the residence times of PTP messages.

*Basic Clock Model*

First a generalized clock offset and skew equation can be defined for the synchronization problem. It is assumed that at any particular time instant, the instantaneous view of the relationship between the GM/master (server) clock with timeline $S(t)$ and the TC (client) clock with timeline $C(f)$, can be described by the well-known simple skew clock model depicted in Figure 6, and described by the equation,

$$S(t) = (1 + \alpha)C(t) + \theta_{in}, \qquad (2)$$

where $\theta_{in}$ is the initial time offset and $\alpha$ is the skew (frequency offset) which is a very small quantity in the order of parts-per-million. For example, oscillators used in Ethernet interfaces are required to have skew $\alpha$ of no more than $\pm 100$ ppm. This snapshot is an instantaneous view of how well the two clocks are (mis)aligned. Figure 6 illustrates the influence of $\theta_{in}$ and $\alpha$ on the alignment.

Equation (2) can further be expressed as

$$S(t) - C(t) = \theta(t) = \alpha C(t) + \theta_{in}, \qquad (3)$$

where $\theta(t) = \alpha C(t) + \theta_{in}$ is the total offset at any particular time $t > 0$. This time varying offset which reflects the true offset between the two clocks consists of two components, one being $\theta_{in}$ the (fixed) initial offset, and the other $\alpha C(t)$ which is an offset that arises as a result of the non-zero skew between the two clocks. Time synchronization in this sense will require knowing accurately the total offset $\theta(t)$ or, equivalently, its constituent components $\alpha$ and $\theta_{in}$, when given any $C(t)$ value.

### *Mechanism for Intercepting and Capturing Timestamps at the End-to-End Transparent Clock*

TCs are capable of intercepting PTP messages and capturing embedded and external TC triggered timestamps. That is, a TC is capable of snooping on PTP messages passing through it. Assume there are $K$ TCs 6 between the GM 1 and the slave 3. The following process takes place at the kth TC, $1 \leq k \leq K$ :

### For Sync messages:

1. TC 6 captures its ingress timestamp $T_{2TC}$ of the arriving Sync message sent from GM 1 to slave 3.
2. TC 6 captures the embedded *correctionFieldvalue* $r_{ftotal}$ in the Sync/Follow_Up message sent from GM 1 to slave
3. The total residence time $r_{ftotal}$ does not include the residence time of the TC under consideration.
3. TC 6 captures the embedded $T_1$ timestamp in the Sync or Follow_Up message sent from GM 1 to slave 3,

    a. *For the one-step clock***:**
    $T_1$ is in the *originTimestamp* field of Sync message and residence time $r_{ftotal}$ is in *correction Field field* of Sync message.

    b. *For the two-step clock:*
    $T_1$ is in the *preciseOriginTimestamp field* of Follow_Up message and residence time $r_{ftotal}$ is in *correctionFieldfield* of Follow_Up message.

### For Delay_Req messages:

1. TC 6 captures its egress timestamp $T_{3TC}$ of the departing Delay_Req message sent from slave 3 to GM 1.
2. TC 6 captures the embedded $T_4$ timestamp in the arriving Delay_Resp message sent from GM 1 to slave 3.
3. Capture of *correctionField* value:

    a. *For the one-step clock.*

    Note that the residence time at a TC is added to the *correctionField* of the Delay_Req message by the egress port of the TC clock as the Delay_Req message is being transmitted.

    So the TC 6 captures (at the egress port) the embedded *correctionField* value $r_a$ in Delay_Req message sent from slave 3 to GM 1. TC 6 also captures the embedded *correctionField* value $r_b$ in Delay_Resp message sent from GM 1 to slave 3. Note that the Delay_Resp message carries the total path residence time ($r_b$) experienced by the Delay_Req message from slave 3 to GM 1. Thus the GM to TC total residence

time is $r_{rtotal} = r_b - r_a$. The total residence time $r_b$ does not include the residence time of the TC under consideration.

b. *For the two-step clock:*

The received Delay_Req message at the TC 6 is transmitted from the egress port. The residence time is added to the *correctionField* of the Delay_Resp message associated with the Delay_Req message prior to transmission of the Delay_Resp message on the egress port.

TC 6 captures (at the ingress port) the embedded *correctionField* value $r_{rtotal}$ in Delay_Resp message sent from GM 1 to slave 3. The value in this field reflects only the total GM to TC residence time. The total residence time $r_{rtotal}$ does not include the residence time of the TC under consideration.

The embedded and TC triggered timestamps captured at the TC 6 (as shown in Figure 7) are used in the computation of the TC clock skew with respect to the GM 1. Techniques for estimating the skew according to embodiments of the present invention are described below.

*Basic Network Synchronization Models*

The basic clock model above can be extended to account for the case where the GM/master clock 4 and slave clock 5 exchange PTP messages and with messages intercepted and timestamps captured at a particular TC 6 as described above. The communication link between a GM 1 and a TC 6 has with it a fixed and random delay. The PTP messages pass through a network of one or multiple E2E TCs 6 from GM 1 to slave 3.

Assume the nth Sync message travelling from the GM 1 to the kth TC 6 experiences a fixed physical link (or propagation) delay of $d_f$ plus variable cumulative residence time of $r_{ftotal,n}$. Similarly, it is assumed the nth Delay_Req message traveling from the kth TC 6 to the GM 1 experiences a fixed delay of $d_r$ plus variable cumulative residence time of $r_{rtolal,n}$.

The GM 1 and slave 3 exchange messages using the delay-request delay-response mechanism described above and illustrated in Figure 1. For the nth Sync message which departs the GM 1 with timestamp $T_{1,n} \in S(t)$ and arrives at the kth TC 6 with timestamp $T_{2TC,n} \in C(t)$ after having experienced delays of $d f$ and $r_{ftotal,n}$, the simple skew clock model above can be extended to account for the travel time to obtain the following expression

$$(T_{1,n} + d_f + r_{ftotal,n}) = (1+\alpha)T_{2TC,n} + \theta_{in} \qquad (4)$$

For the nth Delay_Req message which departs the kth TC 6 with timestamp $T_{3TC,n} \in C(t)$ and arrives at the GM 1 with timestamp $T_{4,n} \in S(t)$ after having experienced delays of $d_r$ and $r_{rtotal,n}$, the following expression is obtained

$$(T_{4,n} - d_r - r_{rtotal,n}) = (1+\alpha)T_{3TC,n} + \theta_{in} \qquad (5)$$

A key assumption here is that the message exchanges occur over a period of time so small that the total offset $\theta$ (omitting here the time index $t$ or $n$) and skew $\alpha$ can be assumed constant over that period. Two possible techniques for computing the offsets $\theta$, $\theta_{in}$ and skew $\alpha$ using the Sync and Delay_Req message exchanges are set out in more detail below.

Even though it is possible to compute both the offset and skew, the focus of these methods is syntonizing the TC by accurately estimating the skew. So the most important parameter here is the skew $\alpha$ which will be used to modify the residence time measurements at the TC so that they will be as close as possible to the ideal values (as if accurate TC clock syntonization is achieved).

*Simple Linear Approximation Technique Skew Estimation at the E2E TCs*

Adding equations (4) and (5) and rearranging gives the clock offset $\theta_{in}$ as

$$\theta_{in} = \frac{(T_{1,n} + T_{4,n}) - (1 + \alpha)(T_{2TC,n} + T_{3TC,n}) + (d_f - d_r) + (r_{ftotal,n} - r_{rtotal,n})}{2}$$
$$= \frac{(T_{1,n} + T_{4,n}) - (1 + \alpha)(T_{2TC,n} + T_{3TC,n})}{2} + \frac{(d_f - d_r)}{2} + \frac{(r_{ftotal,n} - r_{rtotal,n})}{2} \tag{6}$$

If the physical links between the GM and the kth TC are symmetric, then $d_f = d_r$ and

$$\theta_{in} = \frac{(T_{1,n} + T_{4,n}) - (1 + \alpha)(T_{2TC,n} + T_{3TC,n})}{2} + \frac{(r_{ftotal,n} - r_{rtotal,n})}{2} \tag{7}$$

As discussed above, since the focus of this method is syntonization, the aim is to estimate the skew using the Sync and Delay_Req messages. Let $\alpha_1$ denote the component of the skew that can be estimated from the Sync message exchange. For the ($n$-1) and nth Sync message exchange equation (4) above gives the following:

$$(T_{1,n-1} + d_f + r_{ftotal,n-1}) = (1 + \alpha_1)T_{2TC,n-1} + \theta_{in} \tag{8}$$

$$(T_{1,n} + d_f + r_{ftotal,n}) = (1 + \alpha_1)T_{2TC,n} + \theta_{in} \tag{9}$$

Subtracting (8) from (9) gives:

$$(T_{1,n} - T_{1,n-1}) + (r_{ftotal,n} - r_{ftotal,n-1}) = (1 + \alpha_1)(T_{2TC,n} - T_{2TC,n-1}) \tag{10}$$

$$\alpha_1 = \frac{(T_{1,n} - T_{1,n-1}) + (r_{ftotal,n} - r_{ftotal,n-1})}{(T_{2TC,n} - T_{2TC,n-1})} - 1 \tag{11}$$

Let $\alpha_2$ denote the component of the skew that can be estimated from the Delay_Req message exchange. For the (n-1) and nth Delay_Req message exchange equation (5) above gives the following:

$$(T_{4,n-1} - d_r - r_{rtotal,n-1}) = (1 + \alpha_2)T_{3TC,n-1} + \theta_{in} \tag{12}$$

$$(T_{4,n} - d_r - r_{rtotal,n}) = (1 + \alpha_2)T_{3TC,n} + \theta_{in} \tag{13}$$

Subtracting (12) from (13) gives:

$$(T_{4,n} - T_{4,n-1}) - (r_{rtotal,n} - r_{rtotal,n-1}) = (1 + \alpha_2)(T_{3TC,n} - T_{3TC,n-1}) \tag{14}$$

$$\alpha_2 = \frac{(T_{4,n} - T_{4,n-1}) - (r_{rtotal,n} - r_{rtotal,n-1})}{(T_{3TC,n} - T_{3TC,n-1})} - 1 \tag{15}$$

The skew $\alpha$ can then be estimated from $\alpha_1$ and $\alpha_2$ as

$$\alpha = \frac{\alpha_1 + \alpha_2}{2} \tag{16}$$

If desired, the estimated skew $\alpha$ is then used to compute the clock offset $\theta_{in}$ as given in (6). If further desired at any given discrete time n, the estimated skew $\alpha$ and offset $\theta_{in}$ can be used to estimate the server time $S_n$ corresponding

to a local clock value $C_n$.

The residence times can be estimated given the computed skew $\alpha$ and the ingress and egress timestamps generated upon PTP message arrivals using the free-running TC clock as follows. Let $C_{in}$ and $C_{eg}$ denote, respectively, the ingress and egress timestamps captured by the kth TC upon a PTP message arrival at any time instance. Let $\theta_{in}$ also denote the initial time offset of the TC clock with respect to the GM clock. Using (2), the following relationships can be derived:

$$S_{in} = (1+\alpha)C_{in} + \theta_{in} \quad (17)$$

$$S_{eg} = (1+\alpha)C_{eg} + \theta_{in} \quad (18)$$

In the above equations, the ingress and egress timestamps are mapped to the ideal time reference, which in this case is that of the GM. The mapped timestamps are then used to compute the modified (or close to idea) residence times at the TC as follows,

$$r_{\mathrm{mod}} = S_{eg} - S_{in} = (1+\alpha)(C_{eg} - C_{in}) \quad (19)$$

Note that in the above equation the raw uncorrected or skew uncompensated residence time is given by

$$r_{raw} = (C_{eg} - C_{in}) \quad (20)$$

However, it can be seen from (19) that when the skew a = 0 (i.e., TC clock is perfectly syntonized to GM), then the raw residence times are the same as the ideal or modified ones, that is,

$$r_{\mathrm{mod}} = S_{eg} - S_{in} = (C_{eg} - C_{in}) = r_{raw} \quad (21)$$

To compute the modified residence times ($r_{\mathrm{mod}}$), filtered values of the skew ($\hat{\alpha}$) preferably should be used. The filtering can be done using a simple exponentially weighted moving average (EWMA) filter

$$\hat{\alpha}_n = \mu\alpha_n + (1-\mu)\hat{\alpha}_{n-1}, \ 0 < \mu < 1 \quad (22)$$

It can be seen from the above discussion that when using a TC with a free-running clock, only knowledge of the estimated skew is important when estimating the ideal residence times. The EWMA filter described here is a relatively simple estimating technique for the skew estimation. To improve the residence time estimates, a more advanced filtering scheme based on Kalman Filtering for the skew estimation is set out below.

### Kalman Filter Based Technique for Skew Estimation at the E2E TCs

Although, as indicated, the primary interest is in the skew, the models described below can be used with a Kalman filter-based technique to estimate the clock offset and skew. The Kalman filter [1] allows the use of measurements of a process observed over time, containing noise and other inaccuracies, to produce values (estimates) that tend to be closer to the true values of the measurements and their associated calculated values. The Kalman filter produces estimates of the true values of measurements and their associated calculated values by predicting a value, estimating the uncertainty of the predicted value, and computing a weighted average of the predicted value and the measured value.

In order to use the Kalman filter to estimate the internal state of a process given only a sequence of noisy observations, the process must be modeled in accordance with the framework of the Kalman filter. Therefore consider a state-space model described by the following pair of equations

State Equation:

$$X_n = A_n X_{n-1} + w_n , \quad (23)$$

Measurement Equation:

$$y_n = D_n X_n + v_n, \quad (24)$$

where $n$ is a nonnegative time index, $A_n$ is a known M-by-M state transition matrix, $X_n$ is the $M$-dimensional state (or parameter) vector, $w_n$ is an M-dimensional process noise vector which is assumed to be drawn from a zero mean multivariate normal distribution with covariance $Q_n = E[w_n w_n^T]$, $w_n \sim N(0,Q_n)$, $y_n$ is the measurement, $D_n$ is a known 1×M-dimensional measurement matrix which maps the true state space into the measurement space, $v_n$ is the measurement noise which is assumed to be zero mean Gaussian white noise with covariance $R_n = E[v_n v_n^T]$, $v_n \sim N(0, R_n)$, and T denotes transpose. It is assumed in the model that the initial state, and the noise vectors at each step $\{X_0, w_1, ..., w_n, v_1, ..., v_n\}$ are mutually independent.

The notation $\hat{X}_{n,m}$ used below represents the estimate of $X$ at time n given observations up to, and including at time m. The Kalman filter equations are most often conceptualized as two distinct phases: Predict and Update as described below.

**Predict Phase:**

The predict phase uses the state estimate from the previous time step to produce an estimate of the state at the current time step.

- Predicted (a *priori)* state estimate:

$$\hat{X}_{n,n-1} = A_n \hat{X}_{n-1,n-1} \quad (25)$$

This predicted state estimate is also known as the a *priori* state estimate because, although it is an estimate of the state at the current time step, it does not include observation information from the current time step.

- Predicted (a *priori*) estimate covariance:

$$P_{n,n-1} = A_n P_{n-1,n-1} A_n^T + Q_n \quad (26)$$

**Update Phase:**

In the update phase, the current a *priori* prediction is combined with current observation information to refine the state estimate. This improved estimate is termed the a *posteriori* state estimate.

- Innovation or measurement residual:

$$\tilde{z}_n = y_n - D_n \hat{X}_{n,n-1} \quad (27)$$

- Innovation (or residual) covariance:

$$S_n = D_n P_{n,n-1} D_n^T + R_n \quad (28)$$

- Optimal Kalman gain:

$$K_n = P_{n,n-1} D_n^T S_n^{-1} = P_{n,n-1} D_n^T [D_n P_{n,n-1} D_n^T + R_n]^{-1} \quad (29)$$

- Updated (a *posteriori)* state estimate:

$$\hat{X}_{n,n} = \hat{X}_{n,n-1} + K_n \tilde{z}_n = \hat{X}_{n,n-1} + K_n (y_n - D_n \hat{X}_{n,n-1}) \qquad (30)$$

This is the a *posteriori* state estimate at time *n* given observations up to and including at time *n*. The second term in the above equation is called the correction term and it represents the amount by which to correct the propagated state estimate due to the measurement. Inspection of the Kalman gain equation shows that if the measurement noise is large, $R_n$ will be large, so that $K_n$ will be small and not much credibility would be given to the measurement *y* when computing the next $\hat{X}$. On the other hand, if the measurement noise is small, $R_n$ will be small, so that $K_n$ will be large and a lot of credibility will be given to the measurement when computing the next $\hat{X}$.

- Updated (a *posteriori)* estimate covariance:

$$P_{n,n} = (I - K_n D_n) P_{n,n-1} \qquad (31)$$

This is the a *posteriori* error covariance matrix (a measure of the estimated accuracy of the state estimate).

Typically, the two phases alternate, with the prediction advancing the state until the next scheduled observation, and the update incorporating the observation. Practical implementation of the Kalman Filter requires getting a good estimate of the noise covariance matrices $Q_n$ and $R_n$.

*Development of the Measurement Equation*

Assume a Sync message travelling from a GM 1 to the kth TC 6 experiences a fixed delay *d* , variable cumulative residence time $r_{ftotal}$, plus a stochastic delay $\varepsilon$ (to account for all other delay components in the system). Similarly, assume a Delay_Req message leaving the TC 6 to the GM 1 experiences a fixed delay of *d*, variable cumulative residence time $r_{rtotal}$, and a variable stochastic delay y . It is assumed, for the moment, that the fixed delay components in both directions are equal, $d_f = d_r = d$ (symmetric communication paths) but the messages experience variables delays such queuing delays. The variables $\theta_n$ and $\alpha_n$ are the total offset and skew during the nth Sync message exchange. Equations (4) and (5) above can be rewritten to account for the above conditions with the following equations

$$(T_{1,n} + d + r_{ftotal,n} + \varepsilon_n) = (1 + \alpha_n) T_{2TC,n} + \theta_{in} \qquad (32)$$

$$(T_{4,n} - d - r_{rtotal,n} - \gamma_n) = (1 + \alpha_n) T_{3TC,n} + \theta_{in} \qquad (33)$$

It can be seen from equation (3) above that for a given reading of $C_n$, the total offset is $\theta_n = \alpha_n C_n + \theta_{in}$. A key assumption here is the total offset $\theta_n$ stays constant between Sync message exchanges as stated earlier above. With this and assuming further that the $T_{2TC,n} \in C(t)$ and $T_{3TC,n} \in C(t)$ timestamps are captured closer together within any two Sync message exchanges, the total offset $\theta_n$ in that interval can be defined as

$$\theta_n = \alpha_n T_{2TC,n} + \theta_{in} \approx \alpha_n T_{3TC,n} + \theta_{in} \qquad (34)$$

With the above definitions in mind,

$$(T_{1,n} + d + r_{ftotal,n} + \varepsilon_n) = T_{2TC,n} + \theta_n \qquad (35)$$

$$(T_{4,n} - d - r_{rtotal,n} - \gamma_n) = T_{3TC,n} + \theta_n \qquad (36)$$

Adding (35) and (36) gives the measurement equation as

$$(T_{1,n} + T_{4,n}) + (r_{ftotal,n} - r_{rtotal,n}) + (\varepsilon_n - \gamma_n) = (T_{2TC,n} + T_{3TC,n}) + 2\theta_n$$

$$(T_{1,n} - T_{2TC,n}) + (T_{4,n} - T_{3TC,n}) + (r_{ftotal,n} - r_{rtotal,n}) = 2\theta_n + (\gamma_n - \varepsilon_n)$$
(37)

The measurement equation above can be rewritten as

$$\underbrace{(T_{1,n} - T_{2TC,n}) + (T_{4,n} - T_{3TC,n}) + (r_{ftotal,n} - r_{rtotal,n})}_{y_n} = \underbrace{2\theta_n}_{D_n X_n} + \underbrace{(\gamma_n - \varepsilon_n)}_{v_n}$$ (38)

where

n is a nonnegative time index,
$y_n = (T_{1,n} - T_{2TC"n}) + (T_{4,n} - T_{3TC,n}) + (r_{ftotal,n} - r_{total,n})$ is a scalar,
$D_n = [2\ 0]$ is a $1\times2$ matrix,

$$X_n^T = [\theta_n \quad \alpha_n]$$ is a vector, and

$v_n = (\gamma_n - \varepsilon_n)$ is the measurement noise.

Alternatively, in the case where the forward delay $d_f$ and reverse delay $d_r$ are unequal but are known (see equations (4) and (5)), the measurement equation can be obtained as

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$ (39)

where $y_n = (T_{1,n} - T_{2TC,n}) + (T_{4,n} - T_{3TC,n}) + (d_f - d_r) + (r_{ftotal,n} - r_{rtotal,n})$ is a scalar. The quantity $(d_f - d_r)$ accounts for the fixed delay asymmetry in the system. The above more general equation allows for known delays and asymmetries to be accounted for in the Kalman Filter formulation.

The nth sampling interval is considered to be the period in which the nth Sync and nth Delay_Req messages exchanges occur.

*Development of the State (Process) Equation*

Here the TC clock (process) model parameters $A_n$ and $w_n$ are derived. The clock skew over two time points $T_{2,n}$ and $T_{2,n-1}$ can be estimated given two clock offsets $\theta_n$ and $\theta_{n-1}$ as

$$\alpha_{n-1} = \frac{\theta_n - \theta_{n-1}}{T_{2,n} - T_{2,n-1}}.$$ (40)

The process dynamics for the clock while accounting for process noise can then be expressed as:

$$\theta_n = \theta_{n-1} + \alpha_{n-1}(T_{2,n} - T_{2,n-1}) + w_{\theta,n}$$
$$\alpha_n = \alpha_{n-1} + w_{\alpha,n}$$
(41)

where $w_n^T = [w_{\theta,n} \quad w_{\alpha,n}]$ is the process noise vector which is assumed to be drawn from a zero mean normal distribution with covariance $Q_n = E[w_n w_n^T]$. The system can be described by the following two-state dynamic model

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n,$$ (42)

where $A_n$ is the known 2-by-2 state transition matrix. If the time between Sync messages is fixed as would be the case when a constant Sync departure rate is configured at the GM ( ($T_{1,n}$ - $T_{1,n-1}$) = $\Delta t$), then, $\Delta T_n$ = ($T_{2TC,n}$ -$T_{2TC,n-1}$) = $\Delta t$ is a constant term, and

$$A_n = A = \begin{bmatrix} 1 & (T_{1,n} - T_{1,n-1}) \\ 0 & 1 \end{bmatrix} = \begin{bmatrix} 1 & \Delta t \\ 0 & 1 \end{bmatrix}. \qquad (43)$$

In reality, A, is not a fixed matrix because of the variable message delays experienced in the system, thus making (42) the most appropriate expression to be used at each iteration. The clock skew ($\alpha$) estimated at the TC using any of the two techniques described above can be used to compute the modified residence times as given by (19). To achieve time synchronization or equivalently find the server time estimate $S_n$ (although not required in this context), the estimate $\theta_n$ from the Kalman Filter can be used in (3) to obtain $S_n$, that is,

$$S_n = C_n + \theta_n.$$

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

In particular, although the methods of the above embodiments have been described as being implemented on the systems of the embodiments described, the methods and systems of the present invention need not be implemented in conjunction with each other, but can be implemented on alternative systems or using alternative methods respectively.

## References

[1]. R. E. Kalman, "A New Approach to Linear Filtering and Prediction Problems," Transaction of the ASME-Journal of Basic Engineering, March 1960, pp. 35-45.

## Claims

1. A method of estimating the skew of a local clock of an end-to-end transparent clock device (6) connected through a network (2) with a master device (1) having a master clock (4) and a slave device (3), the method including the steps of:

   exchanging timing messages between the master device (1) and the slave device (3) over the network (2), the timing messages passing through said transparent clock device (6);

recording times of sending and receiving of said timing messages by the master device (1);

extracting, by the transparent clock device (6), from timing messages sent from the master device (1) to the slave device (3), the times of sending and receiving of said timing messages;

recording the times of receipt by the transparent clock device (6) of timing messages sent from the master device (1) to the slave device (3);

recording the times of sending by the transparent clock device (6) of timing messages sent from the slave device (3) to the master device (3);

extracting, by the transparent clock device (6), from the timing messages, the residence time of the timing messages in other transparent clock devices (6) between the master device (1) and the transparent clock device (6);

by the transparent clock device (6): measuring a message residence time for a timing message passing through the transparent clock device, modifying a correction field in the received timing message with at least the measured message residence time to generate a modified correction field in the timing message sent from the transparent clock device to the slave device (3); and

estimating, by mthe transparent clock device (6), the skew of the local clock of the transparent clock device compared to the master clock (4) using a plurality of each of said extracted and recorded times.

2.  A method according to claim 1, further including the steps of syntonizing the local clock of the transparent clock device (6) to the master clock (4) and syntonizing a second slave clock (5) in the slave device (3) to the master clock.

3.  A method according to claim 1 or claim 2, further including the step of computing modified residence times by the transparent clock device using the estimated skew of the local clock.

4.  A method according to any one of the preceding claims, wherein the master device (1) and transparent clock device (6) are capable of hardware timestamping arriving and outgoing timing messages, and the step of extracting the residence time includes:

    extracting the residence time recorded in the timing messages sent from the master device (1) to the slave device (3) on arrival in the transparent clock device (6); and

    extracting the residence time recorded in the timing messages sent from the slave device (3) to the master device (1) on departure from the transparent clock device (6) and the total residence time recorded between the slave device and the master device.

5.  A method according to any one of claims 1 to 3, wherein the master device (1) and transparent clock device (6) are not capable of hardware timestamping the arriving and outgoing timing messages, the method further including the steps of:

    for each first timing message sent from the master device (1) to the slave device (3), sending a first further timing message from the master device to the slave device which contains the time of sending of the respective first timing message by the master device, and to which is cumulatively added, by each transparent clock (6) that the further timing message passes through, a first residence time being the time taken for the respective first timing message to pass through each said transparent clock device; and

    for each second timing message sent from the slave device (3) to the master device (1), sending a second further timing message from the master device to the slave device which contains the time of receipt of the respective second timing message by the master device, and to which is cumulatively added, by each transparent clock (6) that the second further timing message passes through, a second residence time being the time taken for the respective second timing message to pass through each said transparent clock device, and wherein the step of extracting the residence time includes:

    extracting the first residence time recorded in one of said first further timing messages; and
    extracting the second residence time recorded in one of said second further timing messages on receipt of the second further timing message at the transparent clock device (6).

6.  A method according to any one of the preceding claims wherein the step of estimating the skew of the local clock includes:

    calculating a component $\alpha_1$ of the skew in the forward direction from master device (1) to slave device (3) as:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wherein $T_{1,n}$ is the departure time of the nth timing message sent from the master device (1) to the slave device (3), $T_{2TC,n}$ is the arrival time of the nth timing message sent from the master device to the slave device at the transparent clock device (6) and $r_{ftotal,n}$ is the cumulative residence time of the nth timing message sent from the master device to the slave device in other transparent clock devices whilst travelling between the master device and the transparent clock device,
calculating a component $\alpha_2$ of the skew in the reverse direction from slave device to master device as:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wherein $T_{4,n}$ is the arrival time of the nth timing message sent from the slave device to the master device, $T_{3TC,n}$ is the departure time of the nth timing message sent from the slave device to the master device from the transparent clock device and $r_{rtotal,n}$ is the cumulative residence time of the nth timing message sent from the slave device to the master device in other transparent clock devices whilst travelling between the transparent clock device and the master device, and
estimating the skew as the average of $\alpha_1$ and $\alpha_2$.

7. A method according to any one of claims 1 to 5 wherein the step of estimating the skew of the local clock includes operating a Kalman filter using the measurement equation

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

wherein $\theta_n$ and $\alpha_n$ are the total offset and skew during the nth exchange of timing messages, $T_{1,n}$ is the departure time of the nth timing message sent from the master device (1) to the slave device (3), $T_{2TC,n}$ is the arrival time of the nth timing message sent from the master device to the slave device at the transparent clock device (6), $T_{4,n}$ is the arrival time of the nth timing message sent from the slave device to the master device, $T_{3TC,n}$ is the departure time of the nth timing message sent from the slave device to the master device from the transparent clock device, $r_{ftotal,n}$ is the cumulative residence time of the nth timing message sent from the master device to the slave device in other transparent clock devices whilst travelling between the master device and the transparent clock device, $r_{rtotal,n}$ is the cumulative residence time of the nth timing message sent from the slave device to the master device in other transparent clock devices whilst travelling between the transparent clock device and the master device, $d_f$ and $d_r$ are the fixed delays in the directions from master device to slave device and slave device to master devices respectively, $Y_n = (T_{1,n} - T_{2TC,n}) + (T_{4,n} - T_{3TC,n}) + (d_f - d_r) + (r_{ftotal,n} - r_{rtotal,n})$ is a scalar, n is a nonnegative time index, $D_n = [2\ 0]$ is a 1×2 matrix, $X_n^T = \begin{bmatrix} \theta_n & \alpha_n \end{bmatrix}$ is a vector, and $v_n = (\gamma_n - \varepsilon_n)$ is the measurement noise, and using the state equation:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

where $w_n^T = \begin{bmatrix} w_{\theta,n} & w_{\alpha,n} \end{bmatrix}$ is a process noise vector.

8. An end-to-end transparent clock device (6) for use in a network (2) between a master device (1) having a master clock (4) and a slave device (3), the transparent clock device having:

a local clock; and
a processor,
wherein the transparent clock device is arranged to:

receive and re-transmit timing messages sent in both directions between the master device (1) and the slave device (3) over the network (2),
and the processor is arranged to:

extract, from timing messages sent from the master device (1) to the slave device (3), the times of sending and receiving of said timing messages;
record the times of receipt by the transparent clock device (6) of timing messages sent from the master device (1) to the slave device (3);
record the times of re-transmission by the transparent clock device (6) of timing messages sent from the slave device (3) to the master device (1);
extract, from the timing messages, the residence time of the timing messages in other transparent clock devices (6) between the master device (1) and the transparent clock device;
measure a message residence time for a timing message passing through the transparent clock device (6), modify a correction field in the received timing message with at least the measured message residence time to generate a modified correction field in the timing message sent from the transparent clock device to the slave device (3); and
estimate the skew of the local clock in the transparent clock device (6) compared to the master clock (4) using a plurality of each of said extracted and recorded times.

9. A transparent clock device (6) according to claim 8 wherein the processor is further arranged to syntonize the local clock in the transparent clock device to the master clock (4).

10. A transparent clock device (6) according to claim 8 or claim 9 wherein the processor is further arranged to compute modified residence times in the transparent clock device using the estimated skew of the local clock.

11. A transparent clock device (6) according to any one of claims 8 to 10, wherein the transparent clock device is capable of hardware timestamping arriving and outgoing timing messages, and the processor is arranged to extract the residence time by:

extracting the residence time recorded in the timing messages sent from the master device (1) to the slave device (3) on arrival in the transparent clock device (6); and
extracting the residence time recorded in the timing messages sent from the slave device (3) to the master device (1) on departure from the transparent clock device (6) and the total residence time recorded between the slave device and the master device.

12. A transparent clock device (6) according to any one of claims 8 to 11, wherein the transparent clock device is not capable of hardware timestamping the arriving and outgoing timing messages, wherein:

for each first timing message sent from the master device (1) to the slave device (3), sending a first further timing message from the master device to the slave device which contains the time of sending of the respective first timing message by the master device, and to which is cumulatively added, by each transparent clock (6) that the further timing message passes through, a first residence time being the time taken for the respective first timing message to pass through each said transparent clock device; and
for each second timing message sent from the slave device (3) to the master device (1), sending a second further timing message from the master device to the slave device which contains the time of receipt of the respective second timing message by the master device, and to which is cumulatively added, by each transparent clock (6) that the second further timing message passes through, a second residence time being the time taken for the respective second timing message to pass through each said transparent clock device,
and wherein the processor is arranged to extract the residence time by:

extracting the first residence time recorded in one of said first further timing messages; and
extracting the second residence time recorded in one of said second further timing messages on receipt of the second further timing message at the transparent clock device (6).

13. A transparent clock device (6) according to any one of claims 8 to 12 wherein the processor is arranged to estimate the skew of the local clock by:

calculating a component $\alpha_1$ of the skew in the forward direction from master device to slave device as:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wherein $T_{1,n}$ is the departure time of the nth timing message sent from the master device (1) to the slave device (3), $T_{2TC,n}$ is the arrival time of the nth timing message sent from the master device to the slave device at the transparent clock device (6) and $r_{ftotal,n}$ is the cumulative residence time of the nth timing message sent from the master device to the slave device in other transparent clock devices whilst travelling between the master device and the transparent clock device,
calculating a component $\alpha_2$ of the skew in the reverse direction from slave device (1) to master device (3) as:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wherein $T_{4,n}$ is the arrival time of the nth timing message sent from the slave device to the master device, $T_{3TC,n}$ is the departure time of the nth timing message sent from the slave device to the master device from the transparent clock device (6) and $r_{rtotal,n}$ is the cumulative residence time of the nth timing message sent from the slave device to the master device in other transparent clock devices whilst travelling between the transparent clock device and the master device, and
estimating the skew as the average of $\alpha_1$ and $\alpha_2$.

14. A transparent clock device (6) according to any one of claims 8 to 12 wherein the processor is arranged to estimate the skew of the local clock by operating a Kalman filter using the measurement equation

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

wherein $\theta_n$ and $\alpha_n$ are the total offset and skew during the nth exchange of timing messages, $T_{1,n}$ is the departure time of the nth timing message sent from the master device (1) to the slave device (3), $T_{2TC,n}$ is the arrival time of the nth timing message sent from the master device to the slave device at the transparent clock device (6), $T_{4,n}$ is the arrival time of the nth timing message sent from the slave device to the master device, $T_{3TC,n}$ is the departure time of the nth timing message sent from the slave device to the master device from the transparent clock device, $r_{ftotal,n}$ is the cumulative residence time of the nth timing message sent from the master device to the slave device in other transparent clock devices whilst travelling between the master device and the transparent clock device, $r_{rtotal,n}$ is the cumulative residence time of the nth timing message sent from the slave device to the master device in other transparent clock devices whilst travelling between the transparent clock device and the master device, $d_f$ and $d_r$ are the fixed delays in the directions from master device to slave device and slave device to master devices respectively, $y_n = (T_{1,n} - T_{2TC,n}) + (T_{4,n} - T_{3TC,n}) + (d_f - d_r) + (r_{ftotal,n} - r_{rtotal,n})$ is a scalar, n is a nonnegative time index, $D_n = [2\ 0]$ is a $1 \times 2$ matrix, $X_n^T = [\theta_n \quad \alpha_n]$ is a vector, and $v_n = (\gamma_n - \varepsilon_n)$ is the measurement noise, and using the state equation:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

where $w_n^T = \begin{bmatrix} w_{\theta,n} & w_{\alpha,n} \end{bmatrix}$ is a process noise vector.

15. A networked time system including a master device (1) having a master clock (4) and a slave device (3), a network (2) connecting the master device to the slave device and an end-to-end transparent clock device (6) according to any one of claims 8 to 14 located in the network between the master device and the slave device, wherein:

the master device (1) and slave device (3) are arranged to exchange timing messages over the network (2), the timing messages passing through said transparent clock device (6); and
the master device (1) is arranged to record times of sending and receiving of said timing messages at the master device.

**Patentansprüche**

1. Verfahren zur Schätzung des Versatzes eines lokalen Taktgebers einer transparenten Ende-zu-Ende-Taktgebervorrichtung (6), die über ein Netzwerk (2) mit einer Master-Vorrichtung (1) mit einem Master-Taktgeber (4) und einer Slave-Vorrichtung (3) verbunden ist, wobei das Verfahren folgende Schritte umfasst:

Austauschen von Zeitmessungsnachrichten zwischen der Master-Vorrichtung (1) und der Slave-Vorrichtung (3) über das Netzwerk (2), wobei die Zeitmessungsnachrichten durch die transparente Taktgebervorrichtung (6) laufen;
Aufzeichnen der Sende- und Empfangszeiten der Zeitmessungsnachrichten durch die Master-Vorrichtung (1);
Extrahieren der Sende- und Empfangszeiten der Zeitmessungsnachrichten aus den von der Master-Vorrichtung (1) an die Slave-Vorrichtung (3) gesendeten Zeitmessungsnachrichten durch die transparente Taktgebervorrichtung (6);
Aufzeichnen der Empfangszeiten der von der Master-Vorrichtung (1) an die Slave-Vorrichtung (3) gesendeten Zeitmessungsnachrichten durch die transparente Taktgebervorrichtung (6);
Aufzeichnen der Sendezeiten der von der Slave-Vorrichtung (3) an die Master-Vorrichtung (3) gesendeten Zeitmessungsnachrichten durch die transparente Taktgebervorrichtung (6);
Extrahieren der Verweilzeit der Zeitmessungsnachrichten in anderen transparenten Taktgebern (6) zwischen der Master-Vorrichtung (1) und dem transparenten Taktgeber (6) durch den transparenten Taktgeber (6) aus den Zeitmessungsnachrichten;
durch die transparente Taktgebervorrichtung (6): Messen einer Nachrichtenverweilzeit für eine Zeitmessungsnachricht, die die transparente Taktgebervorrichtung durchläuft, Modifizieren eines Korrekturfeldes in der empfangenen Zeitmessungsnachricht mit mindestens der gemessenen Nachrichtenverweilzeit, um ein modifiziertes Korrekturfeld in der Zeitmessungsnachricht zu erzeugen, die von der transparenten Taktgebervorrichtung an die Slave-Vorrichtung (3) gesendet wird, und
Schätzen, durch die transparente Taktgebervorrichtung (6), des Versatzes des lokalen Taktgebers der transparenten Taktgebervorrichtung im Vergleich zum Master-Taktgeber (4) unter Verwendung einer Vielzahl von jeder der extrahierten und aufgezeichneten Zeiten.

2. Verfahren nach Anspruch 1, das ferner die Schritte des Synchronisierens des lokalen Taktgebers der transparenten Taktgebervorrichtung (6) mit dem Master-Taktgeber (4) und des Synchronisierens eines zweiten Nebentaktgebers (5) in der Slave-Vorrichtung (3) mit dem Master-Taktgeber enthält.

3. Verfahren nach Anspruch 1 oder Anspruch 2, das ferner den Schritt des Berechnens modifizierter Verweilzeiten durch die transparente Taktgebervorrichtung unter Verwendung des geschätzten Versatzes des lokalen Taktgebers enthält.

4. Verfahren nach einem der vorhergehenden Ansprüche, wobei die Master-Vorrichtung (1) und die transparente Taktgebervorrichtung (6) in der Lage sind, ankommende und abgehende Zeitmessungsnachrichten mit einem Hardware-Zeitstempel zu versehen, und der Schritt des Extrahierens der Verweilzeit Folgendes enthält:

Extrahieren der Verweilzeit, die in den von der Master-Vorrichtung (1) an die Slave-Vorrichtung (3) gesendeten Zeitmessungsnachrichten aufgezeichnet sind, bei Ankunft in der transparenten Taktgebervorrichtung (6); und Extrahieren der Verweilzeit, die in den von der Slave-Vorrichtung (3) an die Master-Vorrichtung (1) gesendeten Zeitmessungsnachrichten beim Verlassen der transparenten Taktgebervorrichtung (6) aufgezeichnet wurde, und der gesamten zwischen der Slave-Vorrichtung und der Master-Vorrichtung aufgezeichneten Verweilzeit.

**5.** Verfahren nach einem der Ansprüche 1 bis 3, wobei die Master-Vorrichtung (1) und die transparente Taktgebervorrichtung (6) nicht in der Lage sind, die ankommenden und abgehenden Zeitmessungsnachrichten hardwaremäßig zu stempeln, wobei das Verfahren ferner folgende Schritte enthält:

für jede erste Zeitmessungsnachricht, die von der Master-Vorrichtung (1) an die Slave-Vorrichtung (3) gesendet wird, Senden einer ersten weiteren Zeitmessungsnachricht von der Master-Vorrichtung an die Slave-Vorrichtung, die die Zeit des Sendens der jeweiligen ersten Zeitmessungsnachricht durch die Master-Vorrichtung enthält und zu der kumulativ addiert wird, durch jeden transparenten Taktgeber (6), den die weitere Zeitmessungsnachricht durchläuft, wobei eine erste Verweilzeit die Zeit ist, die die jeweilige erste Zeitmessungsnachricht benötigt, um jede der transparenten Taktgebervorrichtungen zu durchlaufen, und
für jede zweite Zeitmessungsnachricht, die von der Slave-Vorrichtung (3) an die Master-Vorrichtung (1) gesendet wird, Senden einer zweiten weiteren Zeitmessungsnachricht von der Master-Vorrichtung an die Slave-Vorrichtung, die die Zeit des Empfangs der jeweiligen zweiten Zeitmessungsnachricht durch die Master-Vorrichtung enthält und zu der kumulativ addiert wird, durch jeden transparenten Taktgeber (6), den die zweite weitere Zeitmessungsnachricht durchläuft, wobei eine zweite Verweilzeit die Zeit ist, die die jeweilige zweite Zeitmessungsnachricht benötigt, um jede der transparenten Taktgebervorrichtungen zu durchlaufen,
und wobei der Schritt des Extrahierens der Verweilzeit Folgendes enthält:

Extrahieren der ersten Verweilzeit, die in einer der ersten weiteren Zeitmessungsnachrichten aufgezeichnet ist, und
Extrahieren der zweiten Verweilzeit, die in einer der zweiten weiteren Zeitmessungsnachrichten aufgezeichnet ist, bei Empfang der zweiten weiteren Zeitmessungsnachricht in der transparenten Taktgebervorrichtung (6).

**6.** Verfahren nach einem der vorhergehenden Ansprüche, wobei der Schritt des Schätzens des Versatzes des lokalen Taktgebers Folgendes enthält:

Berechnen einer Komponente $\alpha_1$ des Versatzes in Vorwärtsrichtung von der Master-Vorrichtung (1) zur Slave-Vorrichtung (3) als:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wobei $T_{1,n}$ die Abgangszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung bei der transparenten Taktgebervorrichtung (6) gesendet wird, und $r_{ftotal,n}$ die kumulative Verweilzeit der n-ten Zeitmessungsnachricht ist, die von der Master-Vorrichtung an die Slave-Vorrichtung in anderen transparenten Taktgebervorrichtungen gesendet wird, während sie zwischen der Master-Vorrichtung und der transparenten Taktgebervorrichtung übertragen wird,
Berechnen einer Komponente $\alpha_2$ des Versatzes in umgekehrter Richtung von der Slave-Vorrichtung zur Master-Vorrichtung als:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wobei $T_{4,n}$ die Ankunftszeit der n-ten Zeitmessungsnachricht ist, die von der Slave-Vorrichtung an die Master-Vorrichtung gesendet wird, $T_{3TC,n}$ die Abgangszeit der n-ten Zeitmessungsnachricht ist, die von der Slave-Vorrichtung an die Master-Vorrichtung gesendet wird, von der transparenten Taktgebervorrichtung (6) und $r_{ftotal,n}$ die kumulative Verweilzeit der n-ten Zeitmessungsnachricht ist, die von der Slave-Vorrichtung an die Master-Vorrichtung in anderen transparenten Taktgebervorrichtungen gesendet wird, während sie zwischen der transparenten Taktgebervorrichtung und der Master-Vorrichtung läuft, und
Schätzen des Versatzes als Durchschnitt von $\alpha_1$ und $\alpha_2$.

7.  Verfahren nach einem der Ansprüche 1 bis 5, wobei der Schritt des Schätzens des Versatzes des lokalen Taktgebers den Betrieb eines Kalman-Filters umfasst, unter Verwendung der Messgleichung

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_nX_n} + \underbrace{(\gamma_n - \varepsilon_n)}_{v_n}$$

wobei $\theta_n$ und $\alpha_n$ der gesamte Ausgleich und Versatz während des n-ten Austauschs von Zeitmessungsnachrichten sind, $T_{1,n}$ die Abgangszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung am transparenten Taktgeber (6) gesendet wird, $T_{4,n}$ die Ankunftszeit der n-ten Zeitmessungsnachricht ist, die von der Slave-Vorrichtung an die Master-Vorrichtung gesendet wird, $T_{3TC,n}$ die Abgangszeit der n-ten Zeitmessungsnachricht ist, die von der Slave-Vorrichtung an die Master-Vorrichtung gesendet wird, von der transparenten Taktgebervorrichtung, $r_{ftotal,n}$ die kumulative Verweilzeit der n-ten Zeitmessungsnachricht ist, die von der Master-Vorrichtung an die Slave-Vorrichtung in anderen transparenten Taktgebervorrichtungen gesendet wird, während sie zwischen der Master-Vorrichtung und der transparenten Taktgebervorrichtung übertragen wird, $r_{rtotal,n}$ die kumulative Verweilzeit der n-ten Zeitmessungsnachricht ist, die von der Slave-Vorrichtung an die Master-Vorrichtung in anderen transparenten Taktgebervorrichtungen gesendet wird, während sie zwischen der transparenten Taktgebervorrichtung und der Master-Vorrichtung läuft, $d_f$ und $d_r$ die festen Verzögerungen in den Richtungen von der Master-Vorrichtung zur Slave-Vorrichtung bzw. von der Slave-Vorrichtung zur Master-Vorrichtung sind,

$$y_n = (T_{1,n} - T_{2TC,n}) + (T_{4,n} - T_{3TC,n}) + (d_f - d_r) + (r_{ftotal,n} - r_{rtotal,n})$$

ein Skalar ist, n ein nicht-negativer Zeitindex ist, $D_n = [2\ 0]$ eine 1x2-Matrix ist,

$$X_n^T = [\theta_n \quad \alpha_n]$$

ein Vektor ist, und $v_n = (\gamma_n - \varepsilon_n)$ das Messrauschen ist,
und unter Verwendung der Zustandsgleichung:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wobei

$$w_n^T = [w_{\theta,n} \quad w_{\alpha,n}]$$

ein Prozessrauschvektor ist.

8.  Transparente Ende-zu-Ende-Taktgebervorrichtung (6) zur Verwendung in einem Netzwerk (2) zwischen einer Master-Vorrichtung (1) mit einem Master-Taktgeber (4) und einer Slave-Vorrichtung (3), wobei die transparente Taktgebervorrichtung Folgendes aufweist:

einen lokalen Taktgeber; und
einen Prozessor,
wobei die transparente Taktgebervorrichtung für Folgendes ausgelegt ist:

Empfangen und Weitersenden von Zeitmessungsnachrichten, die in beiden Richtungen zwischen der Master-Vorrichtung (1) und der Slave-Vorrichtung (3) über das Netzwerk (2) gesendet werden,
und der Prozessor für Folgendes ausgelegt ist:

Extrahieren, aus den vor Master-Vorrichtung (1) an die Slave-Vorrichtung (3) gesendeten Zeitmessungsnachrichten, der Sende- und Empfangszeiten der Zeitmessungsnachrichten;
Aufzeichnen der Empfangszeiten der von der Master-Vorrichtung (1) an die Slave-Vorrichtung (3) gesendeten Zeitmessungsnachrichten durch die transparente Taktgebervorrichtung (6);
Aufzeichnen der Weitersendungszeiten der von der Slave-Vorrichtung (3) an die Master-Vorrichtung (1) gesendeten Zeitmessungsnachrichten durch die transparente Taktgebervorrichtung (6);
Extrahieren, aus den Zeitmessungsnachrichten, der Verweilzeit der Zeitmessungsnachrichten in anderen transparenten Taktgebern (6) zwischen der Master-Vorrichtung (1) und dem transparenten Taktgeber;
Messen einer Nachrichtenverweilzeit für eine Zeitmessungsnachricht, die die transparente Taktgebervorrichtung (6) durchläuft, Modifizieren eines Korrekturfeldes in der empfangenen Zeitmessungsnachricht mit mindestens der gemessenen Nachrichtenverweilzeit, um ein modifiziertes Korrekturfeld in der Zeitmessungsnachricht zu erzeugen, die von der transparenten Taktgebervorrichtung an die Slave-Vorrichtung (3) gesendet wird, und
Schätzen des Versatzes des lokalen Taktgebers in der transparenten Taktgebervorrichtung (6) im Vergleich zum Master-Taktgeber (4) unter Verwendung einer Vielzahl von jeder der extrahierten und aufgezeichneten Zeiten.

9. Transparente Taktgebervorrichtung (6) nach Anspruch 8, wobei der Prozessor ferner dafür ausgelegt ist, den lokalen Taktgeber in der transparenten Taktgebervorrichtung mit dem Master-Taktgeber (4) zu synchronisieren.

10. Transparente Taktgebervorrichtung (6) nach Anspruch 8 oder Anspruch 9, wobei der Prozessor ferner dafür ausgelegt ist, modifizierte Verweilzeiten in der transparenten Taktgebervorrichtung unter Verwendung des geschätzten Versatzes des lokalen Taktgebers zu berechnen.

11. Transparente Taktgebervorrichtung (6) nach einem der Ansprüche 8 bis 10, wobei die transparente Taktgebervorrichtung in der Lage ist, ankommende und abgehende Zeitmessungsnachrichten mit einem Hardware-Zeitstempel zu versehen, und der Prozessor dafür ausgelegt ist, die Verweilzeit zu extrahieren durch:

Extrahieren der Verweilzeit, die in den von der Master-Vorrichtung (1) an die Slave-Vorrichtung (3) gesendeten Zeitmessungsnachrichten aufgezeichnet sind, bei Ankunft in der transparenten Taktgebervorrichtung (6); und
Extrahieren der Verweilzeit, die in den von der Slave-Vorrichtung (3) an die Master-Vorrichtung (1) gesendeten Zeitmessungsnachrichten beim Verlassen der transparenten Taktgebervorrichtung (6) aufgezeichnet wurde, und der gesamten zwischen der Slave-Vorrichtung und der Master-Vorrichtung aufgezeichneten Verweilzeit.

12. Transparente Taktgebereinrichtung (6) nach einem der Ansprüche 8 bis 11, wobei die transparente Taktgebereinrichtung nicht in der Lage ist, die ankommenden und abgehenden Zeitmessungsnachrichten hardwaremäßig zu stempeln, wobei:

für jede erste Zeitmessungsnachricht, die von der Master-Vorrichtung (1) an die Slave-Vorrichtung (3) gesendet wird, Senden einer ersten weiteren Zeitmessungsnachricht von der Master-Vorrichtung an die Slave-Vorrichtung, die die Zeit des Sendens der jeweiligen ersten Zeitmessungsnachricht durch die Master-Vorrichtung enthält und zu der kumulativ addiert wird, durch jeden transparenten Taktgeber (6), den die weitere Zeitmessungsnachricht durchläuft, wobei eine erste Verweilzeit die Zeit ist, die die jeweilige erste Zeitmessungsnachricht benötigt, um jede der transparenten Taktgebervorrichtungen zu durchlaufen, und
für jede zweite Zeitmessungsnachricht, die von der Slave-Vorrichtung (3) an die Master-Vorrichtung (1) gesendet wird, Senden einer zweiten weiteren Zeitmessungsnachricht von der Master-Vorrichtung an die Slave-Vorrichtung, die die Zeit des Empfangs der jeweiligen zweiten Zeitmessungsnachricht durch die Master-Vorrichtung enthält und zu der kumulativ addiert wird, durch jeden transparenten Taktgeber (6), den die zweite weitere Zeitmessungsnachricht durchläuft, wobei eine zweite Verweilzeit die Zeit ist, die die jeweilige zweite Zeitmessungsnachricht benötigt, um jede der transparenten Taktgebervorrichtungen zu durchlaufen,
und wobei der Prozessor dafür ausgelegt ist, die Verweilzeit durch Folgendes zu extrahieren:

Extrahieren der ersten Verweilzeit, die in einer der ersten weiteren Zeitmessungsnachrichten aufgezeichnet ist, und
Extrahieren der zweiten Verweilzeit, die in einer der zweiten weiteren Zeitmessungsnachrichten aufgezeichnet ist, bei Empfang der zweiten weiteren Zeitmessungsnachricht in der transparenten Taktgebervorrichtung (6).

13. Transparente Taktgebervorrichtung (6) nach einem der Ansprüche 8 bis 12, wobei der Prozessor dafür ausgelegt ist, den Versatz des lokalen Taktgebers durch Folgendes abzuschätzen:

Berechnen einer Komponente $\alpha_1$ des Versatzes in Vorwärtsrichtung von der Master-Vorrichtung zur Slave-Vorrichtung als:

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

wobei $T_{1,n}$ die Abgangszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung bei der transparenten Taktgebervorrichtung (6) gesendet wird, und $r_{ftotal,n}$ die kumulative Verweilzeit der n-ten Zeitmessungsnachricht ist, die von der Master-Vorrichtung an die Slave-Vorrichtung in anderen transparenten Taktgebervorrichtungen gesendet wird, während sie zwischen der Master-Vorrichtung und der transparenten Taktgebervorrichtung übertragen wird,
Berechnen einer Komponente $\alpha_2$ des Versatzes in umgekehrter Richtung von der Slave-Vorrichtung (1) zur Master-Vorrichtung (3) als:

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

wobei $T_{4,n}$ die Ankunftszeit der n-ten Zeitmessungsnachricht ist, die von der Slave-Vorrichtung an die Master-Vorrichtung gesendet wird, $T_{3TC,n}$ die Abgangszeit der n-ten Zeitmessungsnachricht ist, die von der Slave-Vorrichtung an die Master-Vorrichtung gesendet wird, von der transparenten Taktgebervorrichtung (6) und $r_{rtotal,n}$ die kumulative Verweilzeit der n-ten Zeitmessungsnachricht ist, die von der Slave-Vorrichtung an die Master-Vorrichtung in anderen transparenten Taktgebervorrichtungen gesendet wird, während sie zwischen der transparenten Taktgebervorrichtung und der Master-Vorrichtung läuft, und
Schätzen des Versatzes als Durchschnitt von $\alpha_1$ und $\alpha_2$.

14. Transparente Taktgebervorrichtung (6) nach einem der Ansprüche 8 bis 12, wobei der Prozessor dafür ausgelegt ist, den Versatz des lokalen Taktgebers durch Betreiben eines Kalman-Filters zu schätzen unter Verwendung der Messgleichung

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

wobei $\theta_n$ und $\alpha_n$ der gesamte Ausgleich und Versatz während des n-ten Austauschs von Zeitmessungsnachrichten sind, $T_{1,n}$ die Abgangszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung bei der transparenten Taktgebervorrichtung (6) gesendet wird, $T_{4,n}$ die Ankunftszeit der n-ten Zeitmessungsnachricht ist, die von der Slave-Vorrichtung an die Master-Vorrichtung gesendet wird, $T_{3TC,n}$ die Abgangszeit der n-ten Zeitmessungsnachricht ist, die von der Slave-Vorrichtung an die Master-Vorrichtung gesendet wird, von der transparenten Taktgebervorrichtung, $r_{ftotal,n}$ die kumulative Verweilzeit der n-ten Zeitmessungsnachricht ist, die von der Master-Vorrichtung an die Slave-Vorrichtung in anderen transparenten Taktgebervorrichtungen gesendet wird, während sie zwischen der Master-Vorrichtung und der transparenten Taktgebervorrichtung übertragen wird, $r_{rtotal,n}$ die kumulative Verweilzeit der n-ten Zeitmessungsnachricht ist, die von der Slave-Vorrichtung an die Master-Vorrichtung in anderen transparenten Taktgebervorrichtungen gesendet wird, während sie zwischen der transparenten Taktgebervorrichtung und der Master-Vorrichtung läuft, $d_f$ und $d_r$ die festen Verzögerungen in den Richtungen von der Master-Vorrichtung zur Slave-Vorrichtung bzw. von der Slave-Vorrichtung zu Master-Vorrichtungen sind,

$$y_n = (T_{1,n} - T_{2TC,n}) + (T_{4,n} - T_{3TC,n}) + (d_f - d_r) + (r_{ftotal,n} - r_{rtotal,n})$$

ein Skalar ist, n ein nicht-negativer Zeitindex ist, $D_n = [2\ 0]$ ist eine 1x2-Matrix ist,

$$X_n^T = \begin{bmatrix} \theta_n & \alpha_n \end{bmatrix}$$

ein Vektor ist, und $v_n = (\gamma_n - \varepsilon_n)$ das Messrauschen ist,
und unter Verwendung der Zustandsgleichung:

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wobei

$$w_n^T = \begin{bmatrix} w_{\theta,n} & w_{\alpha,n} \end{bmatrix}$$

ein Prozessrauschvektor ist.

15. Vernetztes Zeitsystem, das Folgendes enthält: eine Master-Vorrichtung (1) mit einem Master-Taktgeber (4) und einer Slave-Vorrichtung (3), ein Netzwerk (2), das die Master-Vorrichtung mit der Slave-Vorrichtung verbindet, und eine transparente Ende-zu-Ende-Taktgebervorrichtung (6) nach einem der Ansprüche 8 bis 14, die sich in dem Netzwerk zwischen der Master-Vorrichtung und der Slave-Vorrichtung befindet, wobei:

die Master-Vorrichtung (1) und die Slave-Vorrichtung (3) dafür ausgelegt sind, Zeitmessungsnachrichten über das Netzwerk (2) auszutauschen, wobei die Zeitmessungsnachrichten durch die transparente Taktgebervorrichtung (6) laufen; und
die Master-Vorrichtung (1) dafür ausgelegt ist, die Zeiten des Sendens und Empfangens der Zeitmessungsnachrichten an der Master-Vorrichtung aufzuzeichnen.

**Revendications**

1. Procédé d'estimation de déphasage d'une horloge locale d'un dispositif d'horloge transparente (6) de bout en bout connecté par l'intermédiaire d'un réseau (2) avec un dispositif maître (1) ayant une horloge maître (4) et un dispositif esclave (3), le procédé comprenant les étapes consistant à :

échanger des messages de synchronisation entre le dispositif maître (1) et le dispositif esclave (3) sur le réseau (2), les messages de synchronisation passant par ledit dispositif d'horloge transparente (6) ;

enregistrer des heures d'envoi et de réception desdits messages de synchronisation par le dispositif maître (1) ;

extraire, par le dispositif d'horloge transparente (6), à partir de messages de synchronisation envoyés du dispositif maître (1) au dispositif esclave (3), les heures d'envoi et de réception desdits messages de synchronisation ;

enregistrer les temps de réception par le dispositif d'horloge transparente (6) de messages de synchronisation envoyés du dispositif maître (1) au dispositif esclave (3) ;

enregistrer les temps d'envoi par le dispositif d'horloge transparente (6) de messages de synchronisation envoyés du dispositif esclave (3) au dispositif maître (3) ;

extraire, par le dispositif d'horloge transparente (6), à partir des messages de synchronisation, le temps de séjour des messages de synchronisation dans d'autres dispositifs d'horloge transparente (6) entre le dispositif maître (1) et le dispositif d'horloge transparente (6) ;

par le dispositif d'horloge transparente (6) : mesurer un temps de séjour de message pour un message de synchronisation passant par le dispositif d'horloge transparente, modifier un champ de correction dans le message de synchronisation reçu avec au moins le temps de séjour de message mesuré pour générer un champ de correction modifié dans le message de synchronisation envoyé du dispositif d'horloge transparente au dispositif esclave (3) ; et

estimer, par le dispositif d'horloge transparente (6), le décalage de l'horloge locale du dispositif d'horloge transparente comparativement à l'horloge maître (4) à l'aide d'une pluralité de chacun desdits temps extraits et enregistrés.

2. Procédé selon la revendication 1, comprenant en outre les étapes consistant à syntoniser l'horloge locale du dispositif d'horloge transparente (6) sur l'horloge maître (4) et syntoniser une deuxième horloge esclave (5) dans le dispositif esclave (3) sur l'horloge maîtresse.

3. Procédé selon la revendication 1 ou la revendication 2, comprenant en outre l'étape consistant à calculer informatiquement des temps de séjour modifiés par le dispositif d'horloge transparente à l'aide du déphasage estimé de l'horloge locale.

4. Procédé selon l'une quelconque des revendications précédentes, dans lequel le dispositif maître (1) et le dispositif d'horloge transparente (6) sont capables d'horodater matériellement des messages de synchronisation entrants et sortants, et l'étape consistant à extraire le temps de séjour comprend :

l'extraction du temps de séjour enregistré dans les messages de synchronisation envoyés du dispositif maître (1) au dispositif esclave (3) à l'arrivée dans le dispositif d'horloge transparente (6) ; et

l'extraction du temps de séjour enregistré dans les messages de synchronisation envoyés du dispositif esclave (3) au dispositif maître (1) au départ du dispositif d'horloge transparente (6) et le temps de séjour total enregistré entre le dispositif esclave et le dispositif maître.

5. Procédé selon l'une quelconque des revendications 1 à 3, dans lequel le dispositif maître (1) et le dispositif d'horloge transparente (6) ne sont pas capables d'horodater matériellement les messages de synchronisation entrants et sortants, le procédé comprenant en outre les étapes consistant à :

pour chaque premier message de synchronisation envoyé du dispositif maître (1) au dispositif esclave (3), envoyer un premier message de synchronisation supplémentaire du dispositif maître au dispositif esclave qui contient le temps d'envoi du premier message de synchronisation respectif par le dispositif maître, et auquel est ajouté cumulativement, par chaque horloge transparente (6) par laquelle passe le message de synchronisation supplémentaire, un premier temps de séjour qui est le temps pris par le premier message de synchronisation respectif pour passer par chacun desdits dispositifs d'horloge transparente ; et

pour chaque deuxième message de synchronisation envoyé du dispositif esclave (3) au dispositif maître (1), envoyer un deuxième message de synchronisation supplémentaire du dispositif maître au dispositif esclave qui contient le temps de réception du deuxième message de synchronisation respectif par le dispositif maître, et auquel est ajouté cumulativement, par chaque horloge transparente (6) par laquelle passe le deuxième message de synchronisation supplémentaire, un deuxième temps de séjour qui est le temps pris par le deuxième message de synchronisation respectif pour passer par chacun desdits dispositifs d'horloge transparente,

et dans lequel l'étape consistant à extraire le temps de séjour comprend :

l'extraction du premier temps de séjour enregistré dans l'un desdits premiers messages de synchronisation supplémentaires ; et

l'extraction du deuxième temps de séjour enregistré dans l'un desdits deuxièmes messages de synchronisation supplémentaires à la réception du deuxième message de synchronisation supplémentaire au niveau du dispositif d'horloge transparente (6).

6. Procédé selon l'une quelconque des revendications précédentes dans lequel l'étape consistant à estimer le déphasage de l'horloge locale comprend :

le calcul d'une composante $\alpha_1$ du déphasage dans la direction avant du dispositif maître (1) au dispositif esclave (3), comme suit :

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

où $T_{1,n}$ est le temps de départ du même message de synchronisation envoyé du dispositif maître (1) au dispositif esclave (3), $T_{2TC,n}$ est le temps d'arrivée du même message de synchronisation envoyé du dispositif maître au dispositif esclave au niveau du dispositif d'horloge transparente (6) et $r_{ftotal,n}$ est le temps de séjour cumulé du $n$ième message de synchronisation envoyé du dispositif maître au dispositif esclave dans d'autres dispositifs d'horloge transparente pendant le déplacement entre le dispositif maître et le dispositif d'horloge transparente, le calcul d'une composante $\alpha_2$ du déphasage dans la direction inverse du dispositif esclave au dispositif maître, comme suit :

$$\alpha_2 = \frac{(T_{4,n} - T_{4,n-1}) - (r_{rtotal,n} - r_{rtotal,n-1})}{(T_{3TC,n} - T_{3TC,n-1})} - 1$$

où $T_{4,n}$ est le temps d'arrivée du même message de synchronisation envoyé du dispositif esclave au dispositif maître, $T_{3TC,n}$ est le temps de départ du $n$ième message de synchronisation envoyé du dispositif esclave au dispositif maître à partir du dispositif d'horloge transparente (6) et $r_{ftotal,n}$ est le temps de séjour cumulé du $n$ième message de synchronisation envoyé du dispositif esclave au dispositif maître dans d'autres dispositifs d'horloge transparente pendant le déplacement entre le dispositif d'horloge transparente et le dispositif maître, et l'estimation du déphasage comme la moyenne de $\alpha_1$ et $\alpha_2$.

7. Procédé selon l'une quelconque des revendications 1 à 5 dans lequel l'étape consistant à estimer le déphasage de l'horloge locale comprend la mise en oeuvre d'un filtre de Kalman à l'aide de l'équation de mesure

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

où $\theta_n$ et $\alpha_n$ sont les décalage et déphasage totaux pendant le même échange de messages de synchronisation, $T_{1,n}$ est le temps de départ du même message de synchronisation envoyé du dispositif maître (1) au dispositif esclave (3), $T_{2TC,n}$ est le temps d'arrivée du $n$ième message de synchronisation envoyé du dispositif maître au dispositif esclave au niveau du dispositif d'horloge transparente (6), $T_{4,n}$ est le temps d'arrivée du même message de synchronisation envoyé du dispositif esclave au dispositif maître, $T_{3TC,n}$ est le temps de départ du $n$ième message de synchronisation envoyé du dispositif esclave au dispositif maître à partir du dispositif d'horloge transparente, $r_{ftotal,n}$ est le temps de séjour cumulé du $n$ième message de synchronisation envoyé du dispositif maître au dispositif esclave dans d'autres dispositifs d'horloge transparente pendant le déplacement entre le dispositif maître et le dispositif d'horloge transparente, $r_{rtotal,n}$ est le temps de séjour cumulé du $n$ième message de synchronisation envoyé du dispositif esclave au dispositif maître dans d'autres dispositifs d'horloge transparente pendant le déplacement entre le dispositif d'horloge transparente et le dispositif maître, $d_f$ et $d_r$ sont les retards fixes dans les directions du dispositif maître au dispositif esclave et du dispositif esclave au dispositif maître, respectivement, $y_n = (T_{1,n} - T_{2TC,n}) + (T_{4,n} - T_{3TC,n}) + (d_f - d_r) + (r_{ftotal,n} - r_{rtotal,n})$ est un scalaire, n est un indice de temps non négatif, $D_n = [2\ 0]$ est une

matrice $1 \times 2$, $X_n^T = [\theta_n \quad \alpha_n]$ est un vecteur, et $v_n = (\gamma_n - \varepsilon_n)$ est le bruit de mesure, et à l'aide de l'équation d'état :

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

où $w_n^T = [w_{\theta,n} \quad w_{\alpha,n}]$ est un vecteur de bruit de processus.

8. Dispositif d'horloge transparente (6) de bout en bout destiné à être utilisé dans un réseau (2) entre un dispositif maître (1) ayant une horloge maître (4) et un dispositif esclave (3), le dispositif d'horloge transparente ayant :

une horloge locale ; et
un processeur,
dans lequel le dispositif d'horloge transparente est agencé pour :

recevoir et retransmettre des messages de synchronisation envoyés dans les deux directions entre le dispositif maître (1) et le dispositif esclave (3) sur le réseau (2),
et le processeur est agencé pour :

extraire, à partir de messages de synchronisation envoyés du dispositif maître (1) au dispositif esclave (3), les temps d'envoi et de réception desdits messages de synchronisation ;
enregistrer les temps de réception par le dispositif d'horloge transparente (6) de messages de synchronisation envoyés du dispositif maître (1) au dispositif esclave (3) ;
enregistrer les temps de retransmission par le dispositif d'horloge transparente (6) de messages de synchronisation envoyés du dispositif esclave (3) au dispositif maître (1) ;
extraire, à partir des messages de synchronisation, le temps de séjour des messages de synchronisation dans d'autres dispositifs d'horloge transparente (6) entre le dispositif maître (1) et le dispositif d'horloge transparente ;
mesurer un temps de séjour de message pour un message de synchronisation passant par le dispositif d'horloge transparente (6), modifier un champ de correction dans le message de synchronisation reçu avec au moins le temps de séjour de message mesuré pour générer un champ de correction modifié dans le message de synchronisation envoyé du dispositif d'horloge transparente au dispositif esclave (3) ; et
estimer le déphasage de l'horloge locale dans le dispositif d'horloge transparente (6) comparativement à l'horloge maître (4) à l'aide d'une pluralité de chacun desdits temps extraits et enregistrés.

9. Dispositif d'horloge transparente (6) selon la revendication 8 dans lequel le processeur est en outre agencé pour syntoniser l'horloge locale dans le dispositif d'horloge transparente sur l'horloge maître (4).

10. Dispositif d'horloge transparente (6) selon la revendication 8 ou la revendication 9 dans lequel le processeur est en outre agencé pour calculer informatiquement des temps de séjour modifiés dans le dispositif d'horloge transparente à l'aide du déphasage estimé de l'horloge locale.

11. Dispositif d'horloge transparente (6) selon l'une quelconque des revendications 8 à 10, dans lequel le dispositif d'horloge transparente est capable d'horodater matériellement des messages de synchronisation entrants et sortants, et le processeur est agencé pour extraire le temps de séjour par :

l'extraction du temps de séjour enregistré dans les messages de synchronisation envoyés du dispositif maître (1) au dispositif esclave (3) à l'arrivée dans le dispositif d'horloge transparente (6) ; et
l'extraction du temps de séjour enregistré dans les messages de synchronisation envoyés du dispositif esclave (3) au dispositif maître (1) au départ du dispositif d'horloge transparente (6) et du temps de séjour total enregistré entre le dispositif esclave et le dispositif maître.

**12.** Dispositif d'horloge transparente (6) selon l'une quelconque des revendications 8 à 11, dans lequel le dispositif d'horloge transparente n'est pas capable d'horodater matériellement les messages de synchronisation entrants et sortants, dans lequel :

pour chaque premier message de synchronisation envoyé du dispositif maître (1) au dispositif esclave (3), envoyer un premier message de synchronisation supplémentaire du dispositif maître au dispositif esclave qui contient le temps d'envoi du premier message de synchronisation respectif par le dispositif maître, et auquel est ajouté cumulativement, par chaque horloge transparente (6) par laquelle passe le message de synchronisation supplémentaire, un premier temps de séjour qui est le temps pris par le premier message de synchronisation respectif pour passer par chacun desdits dispositifs d'horloge transparente ; et
pour chaque deuxième message de synchronisation envoyé du dispositif esclave (3) au dispositif maître (1), envoyer un deuxième message de synchronisation supplémentaire du dispositif maître au dispositif esclave qui contient le temps de réception du deuxième message de synchronisation respectif par le dispositif maître, et auquel est ajouté cumulativement, par chaque horloge transparente (6) par laquelle passe le deuxième message de synchronisation supplémentaire, un deuxième temps de séjour qui est le temps pris par le deuxième message de synchronisation respectif pour passer par chacun desdits dispositifs d'horloge transparente, et dans lequel le processeur est agencé pour extraire le temps de séjour par :

l'extraction du premier temps de séjour enregistré dans l'un desdits premiers messages de synchronisation supplémentaires ; et
l'extraction du deuxième temps de séjour enregistré dans l'un desdits deuxièmes messages de synchronisation supplémentaires à la réception du deuxième message de synchronisation supplémentaire au niveau du dispositif d'horloge transparente (6).

**13.** Dispositif d'horloge transparente (6) selon l'une quelconque des revendications 8 à 12 dans lequel le processeur est agencé pour estimer le déphasage de l'horloge locale par :

le calcul d'une composante $\alpha_1$ du déphasage dans la direction avant du dispositif maître au dispositif esclave, comme suit :

$$\alpha_1 = \frac{(T_{1,n} - T_{1,n-1}) + (r_{ftotal,n} - r_{ftotal,n-1})}{(T_{2TC,n} - T_{2TC,n-1})} - 1$$

où $T_{1,n}$ est le temps de départ du même message de synchronisation envoyé du dispositif maître (1) au dispositif esclave (3), $T_{2TC,n}$ est le temps d'arrivée du $n$ième message de synchronisation envoyé du dispositif maître au dispositif esclave au niveau du dispositif d'horloge transparente (6) et $r_{ftotal,n}$ est le temps de séjour cumulé du $n$ième message de synchronisation envoyé du dispositif maître au dispositif esclave dans d'autres dispositifs d'horloge transparente pendant le déplacement entre le dispositif maître et le dispositif d'horloge transparente, le calcul d'une composante $\alpha_2$ du déphasage dans la direction inverse du dispositif esclave (1) au dispositif maître (3), comme suit :

$$\alpha_2 = \frac{(T_{4,n} - T_{4,n-1}) - (r_{ftotal,n} - r_{ftotal,n-1})}{(T_{3TC,n} - T_{3TC,n-1})} - 1$$

où $T_{4,n}$ est le temps d'arrivée du même message de synchronisation envoyé du dispositif esclave au dispositif maître, $T_{3TC,n}$ est le temps de départ du $n$ième message de synchronisation envoyé du dispositif esclave au dispositif maître à partir du dispositif d'horloge transparente (6) et $r_{ftotal,n}$ est le temps de séjour cumulé du $n$ième message de synchronisation envoyé du dispositif esclave au dispositif maître dans d'autres dispositifs d'horloge transparente pendant le déplacement entre le dispositif d'horloge transparente et le dispositif maître, et l'estimation du déphasage comme la moyenne de $\alpha_1$ et $\alpha_2$.

**14.** Dispositif d'horloge transparente (6) selon l'une quelconque des revendications 8 à 12 dans lequel le processeur est agencé pour estimer le déphasage de l'horloge locale par la mise en oeuvre d'un filtre de Kalman à l'aide de l'équation de mesure

$$\underbrace{(T_{1,n} - T_{2TC,n}) + (T_{4,n} - T_{3TC,n}) + (d_f - d_r) + (r_{ftotal,n} - r_{rtotal,n})}_{y_n} = \underbrace{2\theta_n}_{D_n X_n} + \underbrace{(\gamma_n - \varepsilon_n)}_{v_n}$$

où $\theta_n$ et $\alpha_n$ sont les décalage et déphasage totaux pendant le $n$ième échange de messages de synchronisation, $T_{1,n}$ est le temps de départ du même message de synchronisation envoyé du dispositif maître (1) au dispositif esclave (3), $T_{2TC,n}$ est le temps d'arrivée du même message de synchronisation envoyé du dispositif maître au dispositif esclave au niveau du dispositif d'horloge transparente (6), $T_{4,n}$ est le temps d'arrivée du même message de synchronisation envoyé du dispositif esclave au dispositif maître, $T_{3TC,n}$ est le temps de départ du même message de synchronisation envoyé du dispositif esclave au dispositif maître à partir du dispositif d'horloge transparente, $r_{ftotal,n}$ est le temps de séjour cumulé du même message de synchronisation envoyé du dispositif maître au dispositif esclave dans d'autres dispositifs d'horloge transparente pendant le déplacement entre le dispositif maître et le dispositif d'horloge transparente, $r_{rtotal,n}$ est le temps de séjour cumulé du même message de synchronisation envoyé du dispositif esclave au dispositif maître dans d'autres dispositifs d'horloge transparente pendant le déplacement entre le dispositif d'horloge transparente et le dispositif maître, $d_f$ et $d_r$ sont les retards fixes dans les directions du dispositif maître au dispositif esclave et du dispositif esclave au dispositif maître, respectivement, $y_n = (T_{1,n} - T_{2TC,n}) + (T_{4,n} - T_{3TC,n}) + (d_f - d_r) + (r_{ftotal,n} - r_{rtotal,n})$ est un scalaire, n est un indice de temps non négatif, $D_n = [2\ 0]$ est une matrice $1 \times 2$, $X_n^T = [\theta_n \quad \alpha_n]$ est un vecteur, et $v_n = (\gamma_n - \varepsilon_n)$ est le bruit de mesure, et à l'aide de l'équation d'état :

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

où $w_n^T = [w_{\theta,n} \quad w_{\alpha,n}]$ est un vecteur de bruit de processus.

**15.** Système de temps en réseau comprenant un dispositif maître (1) ayant une horloge maître (4) et un dispositif esclave (3), un réseau (2) connectant le dispositif maître au dispositif esclave et un dispositif d'horloge transparente (6) de bout en bout selon l'une quelconque des revendications 8 à 14 situé dans le réseau entre le dispositif maître et le dispositif esclave, dans lequel :

le dispositif maître (1) et le dispositif esclave (3) sont agencés pour échanger des messages de synchronisation sur le réseau (2), les messages de synchronisation passant par ledit dispositif d'horloge transparente (6) ; et le dispositif maître (1) est agencé pour enregistrer des temps d'envoi et de réception desdits messages de synchronisation au niveau du dispositif maître.

Figure 1

4

Clock Reference

PTP
Messages

6

Equipment **With**
Transparent Clocks

6

5

Recovered Clock

Ethernet Network

| PTP
Master | | E2E
TC | | E2E
TC | | PTP
Slave |

Residence
Time

Residence
Time

1

2

3

Figure 2

Local
Clock

Ingress
Port

PTP Message
Detect

**Residence Time Bridge**

PTP Message
Transfer

Egress
Port

Ingress Timestamp

− +

Egress Timestamp

**Residence Time**

Read Correction Field

+
+

Update Correction Field

| **. . . .** | Correction
Field | **. . . .** |

PTP Message

| **. . . .** | Correction
Field | **. . . .** |

PTP Message

Figure 3

GrandMaster

Transparent
Clock 1

Transparent
Clock 2

Slave

$T_1$

Sync Message

Send
$T_1$

$T_1$
Follow_Up Message

Residence Time
$r_1$

Sync Message

$T_1$
Follow_Up Message
$r_1$

Residence Time
$r_2$

Sync Message

$T_2$

$T_1$
Follow_Up Message
$r_1 + r_2$

Figure 4

1

6

6

3

$T_1$

Sync

$T_{2TC}$

E2E TC

Sync

$T_2$

GM

E2E TC

E2E TC

Slave

$T_4$

Delay_Req

$T_{3TC}$

Delay_Req

$T_3$

Figure 7

Figure 5

**Clock with no Offset**

**Clock with Offset**

Figure 6

## REFERENCES CITED IN THE DESCRIPTION

**Patent documents cited in the description**

- WO 2016092243 A

**Non-patent literature cited in the description**

- **Z. DU et al.** An Enhanced End-to-End Transparent Clock Mechanism with a Fixed Delay Ratio. *IEEE Communications Letters,* vol. 15 (8), 872-874
- **ROSSELOT et al.** IEEE 1588 Boundary Clock and Transparent Clock Implementation Using the DP83640. *National Semiconductor Application Note,* 28 April 2008, 1-6

- **R. E. KALMAN.** A New Approach to Linear Filtering and Prediction Problems. *Transaction of the ASME-Journal of Basic Engineering,* March 1960, 35-45